# EUROPEAN PATENT APPLICATION

(11) **EP 3 719 717 A1**
(43) Date of publication of application: **07.10.2020**
(21) Application number: 20157067.8
(22) Date of filing: 13.02.2020
(51) Int. Cl.: G06Q 10/00

(54) **INFORMATION PROCESSING APPARATUS, INFORMATION PROCESSING METHOD AND LEARNING APPARATUS**

(30) Priority: 03.04.2019 JP 2019071197
(71) Applicant: Panasonic Intellectual Property Management Co., Ltd., Osaka-shi, Osaka 540-6207 (JP)
(72) Inventor: YOSHIDA, Atsushi, Osaka, 540-6207 (JP); YAMAGUCHI, Takao, Osaka, 540-6207 (JP); HIROMOTO, Masaki, Osaka, 540-6207 (JP)
(74) Representative: Eisenführ Speiser

(57) **Abstract**

Problem to be Solved

Learning data appropriate for learning a running state of equipment is obtained.

Solution

An information processing apparatus 100 includes an running information acquiring unit 121 configured to acquire running data, a repair and inspection information acquiring unit 122 configured to acquire repair and inspection information, a period setting unit 130 configured to set a target period, and a learning data generating unit 140 configured to generate first learning data 181 in which an running state of equipment is associated with running information, on a basis of running data in a target period, wherein the period setting unit 130 presents date and time of repair of the equipment included in repair and inspection information as a candidate for an end point of the target period, presents date and time so as to be able to be selected as a candidate for the start point of the target period, sets the selected dates and times as the start point and the end point of the target period, and sets date and time farther from the candidate for the end point as the candidate for the start point to be presented in a case where the number of cases included in the first learning data 181 is smaller than a threshold, than the candidate for the start point to be presented in a case where the number of cases included in the first learning data 181 is equal to or larger than the threshold.

## Description

### BACKGROUND OF THE INVENTION

### Field of the Invention

The present invention relates to an information processing apparatus, an information processing method, and a learning apparatus.

Conventionally, an apparatus which learns data regarding a running state of equipment to diagnose the running state is known (see, for example, International Publication No. WO 2012/073289). The apparatus disclosed in International Publication No. WO 2012/073289 learns past accumulated data which is a measurement signal obtained by measuring a quantity of a state of a plant while classifying the past accumulated data into normal data, predictive data and abnormal data.

### Citation List

### Patent Literature

Patent Literature 1
International Publication No. WO 2012/073289

### Description of the Related Art

While it is desired to prepare a sufficient amount of learning data to diagnose a running state of equipment through learning, it is not easy to secure such an amount of data. For example, with a configuration disclosed in International Publication No. WO 2012/073289, if the number of abnormalities which have occurred in the past is small, it is impossible to secure a large amount of data in a case where an abnormality occurs at the equipment.

The present invention has been made in view of the above-described circumstances, and is directed to obtaining appropriate learning data for learning a running state of equipment.

### SUMMARY OF THE INVENTION

To achieve the above-described object, the present invention is an information processing apparatus including a running information acquiring unit configured to acquire running information of equipment, a repair and inspection information acquiring unit configured to acquire repair and inspection information including details of repair and inspection of the equipment and date or date and time of the repair and inspection, a period setting unit configured to set a target period, and a learning data generating unit configured to generate learning data in which a running state of the equipment is associated with the running information, on the basis of the running information in the target period, wherein the period setting unit presents date or date and time of repair of the equipment included in the repair and inspection information as a candidate for an end point of the target period, presents date or date and time so as to be able to be selected as a candidate for a start point of the target period, sets the selected dates or dates and times as the start point and the end point of the target period, and sets date or date and time farther from the candidate for the end point as the candidate for the start point to be presented in a case where the number of cases included in the learning data is smaller than a threshold, than the candidate for the start point to be presented in a case where the number of cases included in the learning data is equal to or larger than the threshold.

According to this, in a case where the number of cases of the learning data is small, because the target period is set relatively longer, it is possible to secure an amount of the learning data. Further, in a case where the number of cases is equal to or larger than the threshold, by setting the target period relatively shorter, it is possible to select running information particularly appropriate for learning, so that it is possible to generate learning data with high accuracy. Further, because the candidate for the end point of the target period is not shifted from the date or date and time of the repair, it is possible to prevent learning data irrelevant to the repair from being selected, so that it is possible to maintain quality as the learning data. Therefore, it is possible to obtain learning data appropriate for learning the running state of the equipment.

Further, to achieve the above-described object, the present invention is an information processing apparatus including a running information acquiring unit configured to acquire running information of equipment, a repair and inspection information acquiring unit configured to acquire repair and inspection information including details of repair and inspection of the equipment and date or date and time of the repair and inspection, a period setting unit configured to set a normal operation period during which operation of the equipment is regarded as normal operation, and a learning data generating unit configured to generate normal period learning data in which a running state of the equipment is associated with the running information, on the basis of the running information in the normal operation period, wherein the period setting unit presents date or date and time of repair of the equipment included in the repair and inspection information as a candidate for a start point of the normal operation period, presents date or date and time so as to be able to be selected as a candidate for an end point of the normal operation period, sets the selected dates or dates and times as the start point and the end point of the normal operation period, and sets date or date and time farther from the start point as the candidate for the end point to be presented in a case where the number of cases included in the normal period learning data is smaller than a threshold, than the candidate for the end point to be presented in a case where the number of cases included in the normal period learning data is equal to or larger than the threshold.

According to this, in a case where the number of cases of the learning data regarding the normal operation period is small, it is possible to secure an amount of learning data by setting a target period relatively longer. Further, in a case where the number of cases is equal to or larger than the threshold, by setting the target period relatively shorter, it is possible to select running information particularly appropriate for learning, so that it is possible to generate learning data with high accuracy. Therefore, it is possible to obtain learning data appropriate for learning the running state of the equipment in a case where the equipment is normally operating.

### Advantageous Effect of Invention

According to the information processing apparatus of the present invention, it is possible to obtain an appropriate amount of learning data with appropriate quality in accordance with the number of cases included in the learning data. Similar effects can be obtained also according to the information processing method of the present invention.

### BRIEF DESCRIPTION OF THE DRAWINGS

FIG. 1 is an explanatory diagram illustrating a schematic configuration of an equipment management system of an embodiment;
FIG. 2 is a sequence diagram illustrating outline of operation of the equipment management system;
FIG. 3 is a functional block diagram of an information processing apparatus;
FIG. 4 is a configuration diagram of a main part of a storage unit;
FIG. 5 is a flowchart illustrating operation of the information processing apparatus;
FIG. 6 is a flowchart illustrating operation of the information processing apparatus;
FIG. 7 is a pattern diagram illustrating a configuration example of data to be used for generating learning data;
FIG. 8 is a pattern diagram illustrating a configuration example of data to be used for generating learning data;
FIG. 9 is a pattern diagram illustrating a configuration example of data to be used for generating learning data;
FIG. 10 is a view illustrating a display example at a worker terminal; and
FIG. 11 is a view illustrating a display example at the worker terminal.

### DETAILED DESCRIPTION OF THE PREFERRED EMBODIMENT

A first invention is an information processing apparatus including a running information acquiring unit configured to acquire running information of equipment, a repair and inspection information acquiring unit configured to acquire repair and inspection information including details of repair and inspection of the equipment and date or date and time of the repair and inspection, a period setting unit configured to set a target period, and a learning data generating unit configured to generate learning data in which a running state of the equipment is associated with the running information, on the basis of the running information in the target period, wherein the period setting unit presents date or date and time of repair of the equipment included in the repair and inspection information as a candidate for an end point of the target period, presents date or date and time so as to be able to be selected as a candidate for a start point of the target period, sets the selected dates or dates and times as the start point and the end point of the target period, and sets date or date and time farther from the candidate for the end point as the candidate for the start point to be presented in a case where the number of cases included in the learning data is smaller than a threshold, than the candidate for the start point to be presented in a case where the number of cases included in the learning data is equal to or larger than the threshold.

According to this, in a case where the number of cases of the learning data is small, because the target period is set relatively longer, it is possible to secure an amount of learning data. Further, in a case where the number of cases is equal to or larger than the threshold, by setting the target period relatively shorter, it is possible to select running information particularly appropriate for learning, so that it is possible to generate learning data with high accuracy. Still further, because the candidate for the end point of the target period is not shifted from date or date and time of repair, it is possible to prevent learning data irrelevant to repair from being selected, so that it is possible to maintain quality as the learning data. Accordingly, it is possible to obtain learning data appropriate for learning the running state of the equipment.

A second invention is the information processing apparatus wherein, in a case where the number of cases included in the learning data is smaller than a threshold, the period setting unit sets date or date and time farthest from the end point among date or date and time included in the repair and inspection information as the candidate for the start point, while, in a case where the number of cases included in the learning data is equal to or larger than the threshold, sets date or date and time closest to the end point among the date or date and time included in the repair and inspection information as the candidate for the start point.

According to this, in a case where the number of cases of the learning data is small, it is possible to set the longest period including running information relating to repair as the target period, so that it is possible to secure an amount of learning data. Further, in a case where there is a sufficient number of cases included in the learning data, by drastically shortening the target period, it is possible to improve accuracy of the learning data.

A third invention is the information processing apparatus wherein the repair and inspection information includes any one or more among date or date and time at which inspection of the equipment has been executed, date or date and time at which information regarding repair and inspection of the equipment has been received, date or date and time at which setting of the equipment has been changed, and date or date and time at which the equipment has output an alarm regarding the running state, and date or date and time at which repair of the equipment has been executed.

According to this, it is possible to obtain learning data by utilizing running information relating to the repair of the equipment.

A fourth invention is the information processing apparatus wherein the target period is a period during which a running state of the equipment is judged as a specific state, and the period setting unit sets the start point of the target period on the basis of one of date or date and time included in the repair and inspection information, or a symptom found through the inspection of the equipment and a difference between the running information acquired by the running information acquiring unit and the running information in non-abnormal running of the equipment.

According to this, it is possible to easily obtain learning data corresponding to the running state of the equipment.

A fifth invention is the information processing apparatus wherein the running information in non-abnormal running of the equipment is one of the running information obtained upon operational design of the equipment, the running information in test running of the equipment, and the running information during running while running of the equipment is judged as normal operation.

According to this, it is possible to appropriately set the target period on the basis of a timing at which various repair and inspection have been performed on the equipment or the running information in non-abnormal running of the equipment.

A sixth invention is the information processing apparatus further including an operator information storage unit configured to store skill information indicating a skill of an operator for each operator who performs operation of selecting the candidate for the start point of the target period, wherein the period setting unit presents the running information in the target period set on the basis of operation by the operator corresponding to specific skill information so that whether or not to utilize the running information for generating the learning data can be selected.

According to this, it is possible to obtain learning data with high quality while addressing a difference in the skill of the operator who selects the candidate for the start point.

A seventh invention is the information processing apparatus wherein the learning data generating unit generates the learning data in which equipment characteristic information including one of an installation condition of the equipment, layout of the equipment and a type of the equipment is associated with the running information in the target period.

According to this, it is possible to obtain learning data corresponding to the type, the installation condition, the layout, or the like, of the equipment.

An eighth invention is an information processing apparatus including a running information acquiring unit configured to acquire running information of equipment, a repair and inspection information acquiring unit configured to acquire repair and inspection information including details of repair and inspection of the equipment, and date or date and time of the repair and inspection, a period setting unit configured to set a normal operation period during which operation of the equipment is regarded as normal operation, and a learning data generating unit configured to generate normal period learning data in which a running state of the equipment is associated with the running information, on the basis of the running information in the normal operation period, wherein the period setting unit presents date or date and time of repair of the equipment included in the repair and inspection information as a candidate for a start point of the normal operation period, presents date or date and time so as to be able to be selected as a candidate for an end point of the normal operation period, sets the selected dates or dates and times as the start point and the end point of the normal operation period, and sets date or date and time farther from the start point as the candidate for the end point to be presented in a case where the number of cases included in the normal period learning data is smaller than a threshold, than the candidate for the end point to be presented in a case where the number of cases included in the normal period learning data is equal to or larger than the threshold.

According to this, in a case where the number of cases of learning data regarding the normal operation period is small, it is possible to secure an amount of learning data by setting the normal operation period relatively longer. Further, in a case where the number of cases is equal to or larger than the threshold, by setting the normal operation period relatively shorter, it is possible to select running information particularly appropriate for learning, so that it is possible to generate learning data with high accuracy. Accordingly, it is possible to obtain learning data appropriate for learning the running state of the equipment in a case where the equipment is normally operating.

A ninth invention is the information processing apparatus wherein, in a case where the number of cases included in the normal period learning data is smaller than a threshold, the period setting unit sets date or date and time farthest from the start point among date or date and time included in the repair and inspection information as the candidate for the end point, while, in a case where the number of cases included in the normal period learning data is equal to or larger than the threshold, sets date or date and time closest to the start point among the date or date and time included in the repair and inspection information as the candidate for the end point.

According to this, in a case where the number of cases of the normal period learning data is small, it is possible to set the normal operation period longer, so that it is possible to secure an amount of the normal period learning data. Further, in a case where a sufficient number of cases are included in the normal period learning data, by shortening the normal operation period, it is possible to improve accuracy of the normal period learning data.

A tenth invention is the information processing apparatus wherein the repair and inspection information includes any one or more among date or date and time at which inspection of the equipment has been executed, date or date and time at which information regarding repair and inspection of the equipment has been received, date or date and time at which setting of the equipment has been changed, and date or date and time at which the equipment has output an alarm regarding the running state, and date or date and time at which repair of the equipment has been executed.

According to this, it is possible to obtain normal period learning data by utilizing running information relating to the repair of the equipment.

An eleventh invention is the information processing apparatus wherein the period setting unit sets the end point of the normal operation period on the basis of one of date or date and time included in the repair and inspection information, or a symptom found through inspection of the equipment and a difference between the running information acquired by the running information acquiring unit and the running information in non-abnormal running of the equipment.

According to this, it is possible to obtain normal period learning data on the basis of the running state of the equipment.

A twelfth invention is the information processing apparatus wherein the running information in non-abnormal running of the equipment is one of the running information obtained upon operational design of the equipment, the running information in test running of the equipment and the running information during running while operation of the equipment is judged as normal operation.

According to this, it is possible to appropriately set the normal operation period on the basis of a timing at which various repair and inspection have been performed on the equipment or the running information in non-abnormal running of the equipment.

A thirteenth invention is the information processing apparatus further including an operator information storage unit configured to store skill information indicating a skill of an operator for each operator who performs operation of selecting a candidate for the end point of the normal operation period, wherein the period setting unit presents running information in the normal operation period set on the basis of operation by the operator corresponding to specific skill information so that whether or not to utilize the running information for generating the normal period learning data can be selected.

According to this, it is possible to obtain normal period learning data with high quality while addressing a difference in a skill of the operator who selects a candidate for a start point.

A fourteenth invention is the information processing apparatus wherein the learning data generating unit generates the normal period learning data in which equipment characteristic information including one of an installation condition of the equipment, layout of the equipment and a type of the equipment is associated with the running information in the normal operation period.

According to this, it is possible to obtain normal period learning data corresponding to the type, the installation condition, the layout, or the like, of the equipment.

A fifteenth invention is an information processing method including acquiring running information of equipment, acquiring repair and inspection information including details of repair and inspection of the equipment and date or date and time of the repair and inspection, performing period setting processing of setting a start point and an end point of a target period, generating learning data in which a running state of the equipment is associated with the running information, on the basis of the running information in the target period set in the period setting processing, in the period setting processing, presenting date or date and time of repair of the equipment included in the repair and inspection information as a candidate for the end point of the target period, presenting date or date and time so as to be able to be selected as a candidate for the start point of the target period, setting the selected dates or dates and times as the start point and the end point of the target period, and, setting date or date and time farther from the candidate for the end point as the candidate for the start point to be presented in a case where the number of cases included in the learning data is smaller than a threshold, than the candidate for the start point to be presented in a case where the number of cases included in the learning data is equal to or larger than the threshold.

According to this, in a case where the number of cases of learning data is small, because the target period is set relatively longer, it is possible to secure an amount of learning data. Further, in a case where the number of cases is equal to or larger than the threshold, by setting the target period relatively shorter, it is possible to select running information particularly appropriate for learning, so that it is possible to generate learning data with high accuracy. Still further, because the candidate for the end point of the target period is not shifted from date or date and time of repair, it is possible to prevent learning data irrelevant to the repair from being selected, so that it is possible to maintain quality as the learning data. Accordingly, it is possible to obtain learning data of an amount and with quality appropriate for learning the running state of the equipment.

A sixteenth invention is an information processing method including acquiring running information of equipment, acquiring repair and inspection information including details of repair and inspection of the equipment and date or date and time of the repair and inspection, performing period setting processing of setting a normal operation period during which operation of the equipment is regarded as normal operation, generating normal period learning data in which a running state of the equipment is associated with the running information, on the basis of the running information in the normal operation period, in the period setting processing, presenting date or date and time of repair of the equipment included in the repair and inspection information as a candidate for a start point of the normal operation period, presenting date or date and time so as to be able to be selected as a candidate for an end point of the normal operation period, setting the selected dates or dates and times as the start point and the end point of the normal operation period, and setting date or date and time farther from the start point as the candidate for the end point to be presented in a case where the number of cases included in the normal period learning data is smaller than a threshold, than the candidate for the end point to be presented in a case where the number of cases included in the normal period learning data is equal to or larger than the threshold.

According to this, it is possible to present a candidate for the normal operation period during which operation of the equipment is regarded as normal operation, and obtain learning data regarding normal operation of the equipment on the basis of the start point and the end point of the normal operation period designated on the basis of the candidate. By this means, it is possible to obtain learning data appropriate for learning the running state of the equipment in a case where the equipment is normally operating.

A seventeenth invention is a learning apparatus including a running information acquiring unit configured to acquire running information of equipment, a repair and inspection information acquiring unit configured to acquire repair and inspection information including details of repair and inspection of the equipment and date or date and time of the repair and inspection, a learning data generating unit configured to generate learning data on the basis of the running information in a target period set on the basis of the repair and inspection information, and a learning unit configured to learn a condition of the running information to be associated with a running state of the equipment, on the basis of the learning data.

According to this, by learning relation between the running state of the equipment and the running information acquired from the equipment, it is possible to predict, diagnose or detect the running state of the equipment with high accuracy.

An embodiment to which the present invention is applied will be described below with reference to the drawings.

### [1. Configuration of equipment management system]

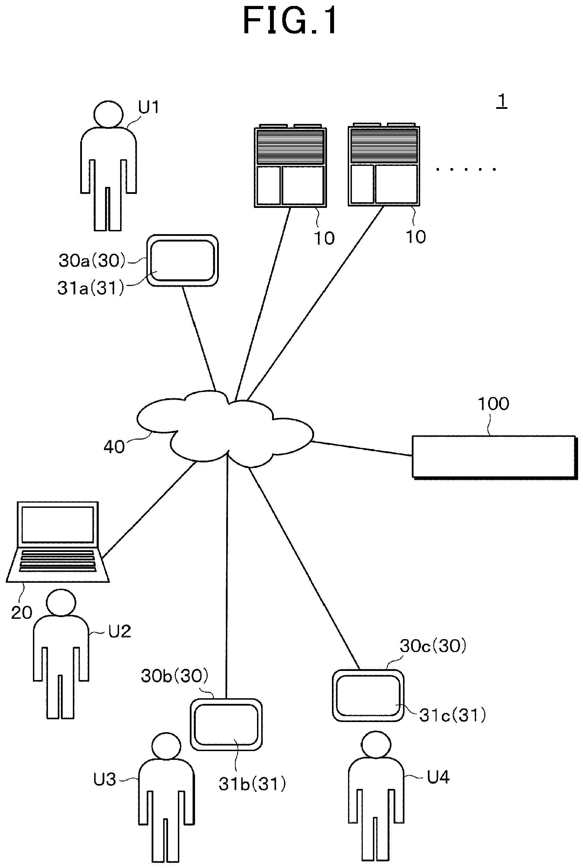

FIG. 1 is an explanatory diagram illustrating a schematic configuration of an equipment management system 1 including an information processing apparatus 100 to which the present invention is applied.

The equipment management system 1 is a system which processes information for managing equipment. Types and configurations of equipment managed by the equipment management system 1 are not limited, and, in the present embodiment, a configuration which manages an air conditioning apparatus 10 will be described as an example. The equipment management system 1 includes a reception terminal 20 to be used in association with repair and inspection of the air conditioning apparatus 10, and a worker terminal 30. The number of reception terminals 20 and the worker terminals 30 is not particularly limited. Further, the number of pieces of equipment managed by the equipment management system 1 is not limited.

In the following description, among events occurring at the air conditioning apparatus 10, a defect or a failure which requires repair and treatment will be referred to as an abnormality. Repair and inspection of the air conditioning apparatus 10 includes repair and adjustment in a case where an abnormality occurs at the air conditioning apparatus 10, setting and setting change of the air conditioning apparatus 10, and inspection of the air conditioning apparatus 10.

The air conditioning apparatus 10 is an apparatus which includes an outdoor unit including a compressor, a heat source side heat exchanger, a blast fan, or the like, and an indoor unit including a user side heat exchanger, a blast fan, or the like, and the number and connection forms of the outdoor unit and the indoor unit are not limited. The air conditioning apparatus 10 includes a control apparatus which controls the outdoor unit and the indoor unit and which are not illustrated, and the control apparatus is connected to the information processing apparatus 100 via a communication network 40. The air conditioning apparatus 10 includes various sensors for monitoring a state of the outdoor unit and the indoor unit, and the control apparatus transmits running data including setting values regarding control of the air conditioning apparatus 10, measurement values of sensors, or the like, to the information processing apparatus 100. Further, the control apparatus of the air conditioning apparatus 10 outputs an alarm to the information processing apparatus 100 in a case where a failure or an abnormality of a running state of the air conditioning apparatus 10 is detected.

The reception terminal 20 is an apparatus to be used by a worker U2 who performs reception work regarding repair and inspection of the air conditioning apparatus 10. The worker U2 inputs reception information using the reception terminal 20 in a case where a request for repair and inspection of the air conditioning apparatus 10 is received from a customer who possesses or manages the air conditioning apparatus 10 on the phone or using an e-mail.

The worker terminal 30 is an apparatus to be used by a worker U who is involved in repair and inspection of the air conditioning apparatus 10. In FIG. 1, three workers U1, U3 and U4 use respective worker terminals 30a, 30b and 30c. In the present embodiment, in a case where the worker terminals 30a, 30b and 30c are not distinguished and are collectively referred to, they are expressed as the worker terminal 30. A similar rule is applied, and the workers U1, U2, U3 and U4 are expressed as the worker U, and touch panels 31a, 31b and 31c which will be described later are expressed as a touch panel 31. The workers U1, U3 and U4 correspond to an example of an operator of the present invention.

In the following description, the worker U1 is a worker who goes off to an installation location of the air conditioning apparatus 10 and performs work of repair and inspection, and the worker U3 performs operation regarding generation of learning data which will be described later. The worker U4 is an assistant who assists the worker U3 in generation of learning data. The number of workers U who are involved in the equipment management system 1 is not limited, and, for example, one person may play roles of both the worker U1 and the worker U3, which will be described in the present embodiment.

The reception terminal 20 and the worker terminal 30 are computers on which input operation can be performed and information can be displayed, and are personal computers, tablet computers, smartphones or other forms of apparatuses.

The worker terminal 30 has the touch panel 31. The worker terminals 30a, 30b and 30c respectively have the touch panels 31a, 31b and 31c.

The touch panel 31 is a member on which a touch sensor which detects touch operation by the worker U and a display panel are superimposed, and functions as an input apparatus which inputs information and as a display apparatus which displays information. For example, when the worker U1 performs repair and inspection of the air conditioning apparatus 10, the worker U1 carries the worker terminal 30a and inputs information by performing operation on the touch panel 31a.

The reception terminal 20 and the worker terminal 30 are respectively connected to the information processing apparatus 100 via the communication network 40. The reception terminal 20 and the worker terminal 30 include a data communication function and execute data communication with the information processing apparatus 100.

The communication network 40 connects the reception terminal 20, the worker terminal 30 and the information processing apparatus 100 so as to enable data communication with each other. The communication network 40 may include a public switched telephone network, a private line and various wireless communication lines, and may include equipment such as a server, a router, and a wireless communication access point.

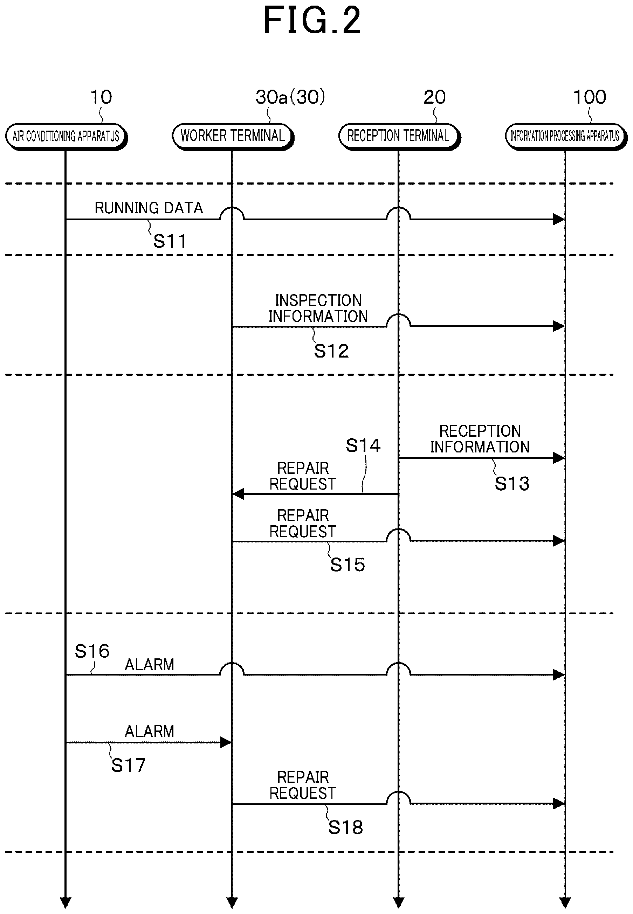

FIG. 2 is a sequence diagram illustrating outline of operation of the equipment management system 1, and, particularly, illustrates operation of a collection phase in which the information processing apparatus 100 collects data from respective apparatuses of the equipment management system 1. While FIG. 2 illustrates operation of the respective apparatuses from top to bottom for descriptive purpose, an execution order of these operations is not limited to the order illustrated in FIG. 2.

At the equipment management system 1, the air conditioning apparatus 10 transmits running data to the information processing apparatus 100 (step S11). The operation in step S11 is repeatedly and constantly executed at a time interval set in advance. The running data transmitted by the air conditioning apparatus 10 does not have to include all setting values of the air conditioning apparatus 10 and all measurement values of the sensors. For example, the air conditioning apparatus 10 may transmit running data for each sensor or at timings different for each type of the sensor. In this case, the running data may be generated and transmitted in accordance with a sampling period of each sensor.

In the present embodiment, operation is assumed where the worker U1 periodically performs inspection of the air conditioning apparatus 10 on the basis of a contract with a customer at the equipment management system 1. The worker U1 inputs details and a result of the inspection to the worker terminal 30a every time the worker U1 performs inspection of the air conditioning apparatus 10. The worker terminal 30a transmits inspection information including the information input by the worker U1 to the information processing apparatus 100 (step S12). The operation in step S12 is repeatedly executed in accordance with a period of periodic inspection of the air conditioning apparatus 10. Further, the operation in step S12 may be executed in a case where inspection of the air conditioning apparatus 10 which is not periodic is executed.

When the worker U2 receives a request for repair from the customer, the worker U2 inputs request details to the reception terminal 20. The reception terminal 20 transmits reception information input by the worker U2 to the information processing apparatus 100 (step S13).

The worker U2 operates the reception terminal 20 to cause the worker U1 to perform repair requested from the customer. Through this running data which requests repair is transmitted from the reception terminal 20 to the worker terminal 30a (step S14). The worker U1 executes repair of the air conditioning apparatus 10 in accordance with the request transmitted by the reception terminal 20 to the worker terminal 30a. After repair work, the worker U1 inputs repair details to the worker terminal 30a. The worker terminal 30a transmits repair information input by the worker U1 to the information processing apparatus 100 (step S15). The request for repair from the worker U2 to the worker U1 may be performed on the phone or using other means of communication without intervening the reception terminal 20 and the worker terminal 30a.

The operation from step S13 to S15 is executed every time the reception terminal 20 receives a request.

As described above, repair and inspection of the air conditioning apparatus 10 include setting and setting change regarding operation of the air conditioning apparatus 10. In a case where the worker U1 performs setting work of the air conditioning apparatus 10 in response to a request, or the like, from the customer, a result of the setting work is transmitted from the worker terminal 30a to the information processing apparatus 100 as repair information. The setting work is not limited to work to be executed by the worker U1 by going off to an installation location of the air conditioning apparatus 10, and, for example, may be setting work which is performed by the worker terminal 30a or other computers remotely connecting to the air conditioning apparatus 10.

The air conditioning apparatus 10 transmits data indicating an alarm to the information processing apparatus 100 in a case where an abnormality is detected (step S16). Further, the air conditioning apparatus 10 may transmit data indicating an alarm to the worker terminal 30a (step S17). Further, data which requests repair may be transmitted from the information processing apparatus 100 to the worker terminal 30a in response to the alarm of the air conditioning apparatus 10. The worker U1 executes repair of the air conditioning apparatus 10 and inputs repair details to the worker terminal 30a. The worker terminal 30a transmits repair information input by the worker U1 to the information processing apparatus 100 (step S18).

The operation from step S16 to S18 is executed every time the reception terminal 20 receives a request.

In this manner, in the equipment management system 1, repair and inspection are executed on the air conditioning apparatus 10 as appropriate, and the information processing apparatus 100 collects data regarding the repair and inspection.

The information processing apparatus 100 generates learning data 180 on the basis of the collected data as will be described later. The learning data 180 is utilized for learning of artificial intelligence (Al) which executes abnormality detection, failure diagnosis, failure prediction, or the like, of the air conditioning apparatus 10.

### [2. Configuration of information processing apparatus]

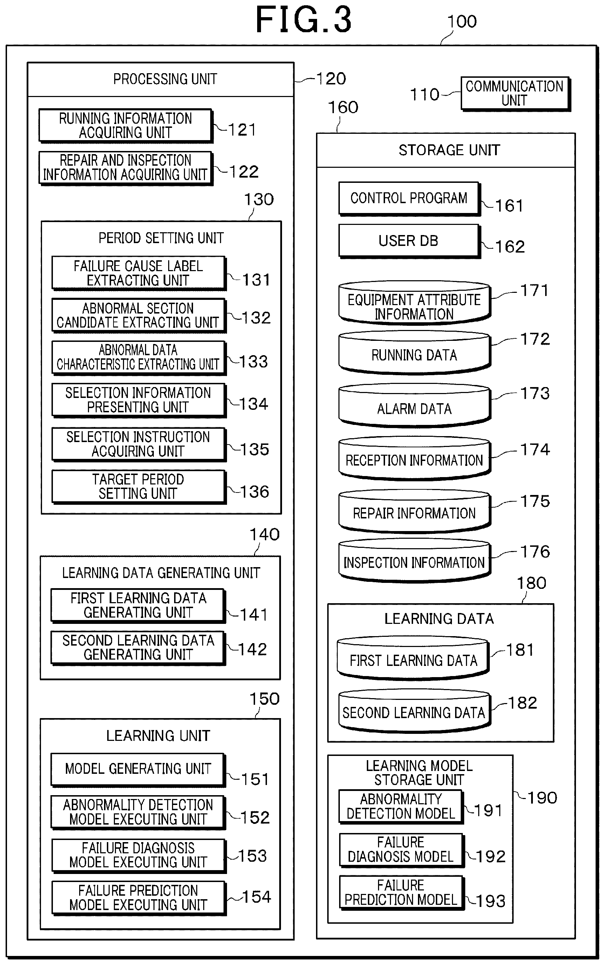

FIG. 3 is a functional block diagram of the information processing apparatus 100.

The information processing apparatus 100 is a computer which executes a program with a processor such as a CPU (Central Processing Unit) and a microcomputer, and can be paraphrased as a management server which manages the air conditioning apparatus 10.

The information processing apparatus 100 includes a communication unit 110 which executes data communication with the air conditioning apparatus 10, the reception terminal 20, the worker terminal 30, or the like, via the communication network 40.

The information processing apparatus 100 includes a processing unit 120 and a storage unit 160. The processing unit 120 is configured with a processor or a device in which a processor and a ROM (Read Only Memory), a RAM (Random Access Memory), or the like, are integrated.

The storage unit 160 is configured with a semiconductor memory device, a magnetic storage medium, an optical storage medium, other storage devices, or the like, and stores data and a program so as to be able to be read by the processor of the processing unit 120. The storage unit 160 of the present embodiment stores a control program 161, equipment attribute information 171, running data 172, alarm data 173, reception information 174, repair information 175, inspection information 176 and learning data 180.

Further, a learning model storage unit 190 is provided in a storage region of the storage unit 160. The learning model storage unit 190 stores an abnormality detection model 191, a failure diagnosis model 192 and a failure prediction model 193.

The control program 161 is a program to be executed by the processor of the processing unit 120.

The user DB 162 is a database which stores information regarding a user who is involved in processing to be executed by the information processing apparatus 100. The user refers to the worker U of the equipment management system 1. For example, the user DB 162 stores information regarding user identification information, name, occupation, a skill, or the like, unique to the worker U. The user DB 162 corresponds to an example of an operator information storage unit of the present invention.

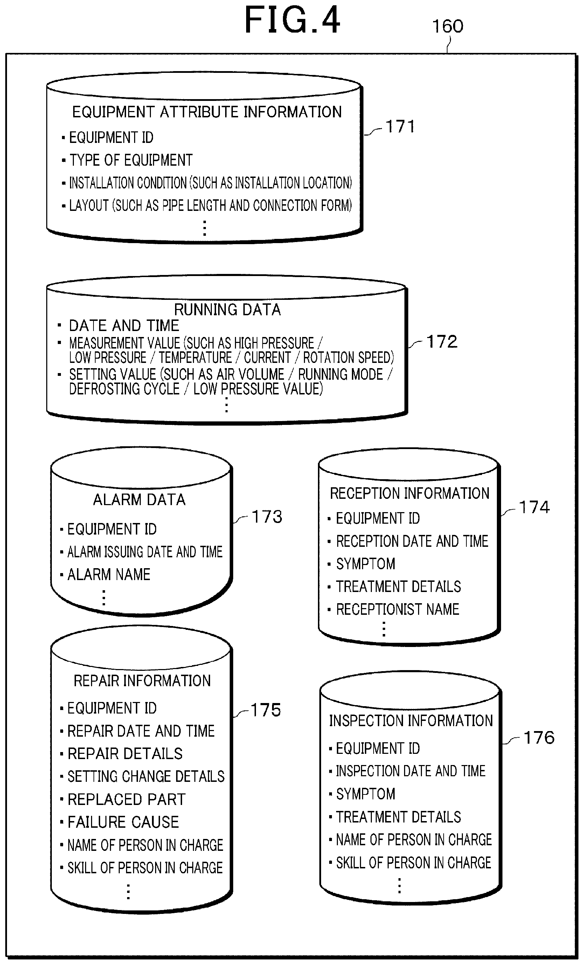

FIG. 4 is a configuration diagram of a main part of the storage unit 160 and illustrates a specific example of content of part of information stored in the storage unit 160.

The equipment attribute information 171 includes information regarding equipment to be managed which is to be managed by the equipment management system 1. Specifically, the equipment attribute information 171 includes information indicating an equipment ID for identifying the air conditioning apparatus 10, a type of equipment, an installation condition and layout for each air conditioning apparatus 10 to be managed. The installation condition is information indicating an installation location, or the like, of the air conditioning apparatus 10, and, for example, indicates a roof terrace, ground, a heat source machine room inside a building, or the like. The layout is information regarding an overall configuration of the air conditioning apparatus 10, and is, for example, information regarding a pipe length, a connection form between the outdoor unit and the indoor unit, or a connection form to the control apparatus. The equipment attribute information 171 corresponds to an example of equipment characteristic information of the present invention.

The running data 172 includes content of the running data to be transmitted by the air conditioning apparatus 10. The running data 172 includes, for example, date and time, measurement values of sensors, or setting values. The date and time are date and time at which a sensor has performed measurement or date and time at which the air conditioning apparatus 10 has transmitted the running data.

The alarm data 173 includes data regarding an alarm to be transmitted by the air conditioning apparatus 10. The alarm data 173 includes an equipment ID of the air conditioning apparatus 10 which has output the alarm, alarm issuing date and time indicating date and time at which an alarm has been output, alarm name, or the like. The alarm name is information indicating content or a type of the alarm.

The reception information 174 includes content of the reception information to be transmitted by the reception terminal 20, and includes, for example, an equipment ID of the air conditioning apparatus 10 which is a target of a request for repair, reception date and time, a symptom, treatment details, or a receptionist name. The reception date and time are date and time at which the worker U2 has received the request or date and time at which information has been input at the reception terminal 20. The symptom is details of a malfunction or a failure of the air conditioning apparatus 10 for which a request for repair has been made. The treatment details are details of treatment which has been performed by the worker U1 in response to the request. The treatment details may be added or updated on the basis of information transmitted from the reception terminal 20 or the worker terminal 30 after work by the worker U1. The receptionist name is name or user identification information of the worker U2.

The repair information 175 includes content of repair information to be transmitted by the worker terminal 30a, and, for example, includes an equipment ID of the air conditioning apparatus 10 which has been repaired, repair date and time, repair details, setting change details, a replaced part, a failure cause, name of a person in charge, and a skill of a person in charge. The repair details are details of repair executed on the air conditioning apparatus 10, and the setting change details are items set by setting work of the air conditioning apparatus 10 or changed content. The name of a person in charge and the skill of a person in charge are information indicating name and a skill of the worker U who has performed repair or setting work. The skill of a person in charge may be information acquired from the user DB 162 on the basis of the name of the person in charge.

The inspection information 176 includes content of inspection information to be transmitted by the worker terminal 30a, and, for example, includes an equipment ID of the inspected air conditioning apparatus 10, inspection date and time, a symptom, treatment details, name of a person in charge and a skill of a person in charge. The symptom is a defect, or the like, of the air conditioning apparatus 10 found through inspection. The name of a person in charge is name of the worker U who has performed inspection, and the skill of a person in charge indicates a learning level and a skill level of a person in charge. The skill of a person in charge may be information acquired from the user DB 162 on the basis of the name of the person in charge.

The processing unit 120 functions as a running information acquiring unit 121, a repair and inspection information acquiring unit 122, a period setting unit 130, a learning data generating unit 140 and a learning unit 150 by executing the control program 161.

The running information acquiring unit 121 and the repair and inspection information acquiring unit 122 acquire information received by the communication unit 110 in a collection phase. That is, the running data received in step S11 in FIG. 2, the inspection information received in step S12, the reception information received in step S13, the alarm received in step S16 and the repair information received in step S18 can be acquired.

The running information acquiring unit 121 acquires the running data transmitted by the air conditioning apparatus 10, generates running data 172 on the basis of the acquired data, and causes the running data 172 to be stored in the storage unit 160. The running information acquiring unit 121 generates alarm data 173 on the basis of the alarm output by the air conditioning apparatus 10, and causes the alarm data 173 to be stored in the storage unit 160. The running information acquiring unit 121 updates the running data 172 or the alarm data 173 to be stored in the storage unit 160 every time the communication unit 110 receives the running data or the alarm from the air conditioning apparatus 10.

The repair and inspection information acquiring unit 122 acquires the reception information transmitted by the reception terminal 20, generates reception information 174 on the basis of the acquired reception information, and causes the reception information 174 to be stored in the storage unit 160. The repair and inspection information acquiring unit 122 acquires the repair information transmitted by the worker terminal 30a, generates repair information 175 on the basis of the acquired repair information, and causes the repair information 175 to be stored in the storage unit 160. The repair and inspection information acquiring unit 122 acquires the inspection information transmitted by the worker terminal 30a, generates inspection information 176 on the basis of the acquired inspection information, and causes the inspection information 176 to be stored in the storage unit 160. The repair and inspection information acquiring unit 122 updates the reception information 174, the repair information 175 or the inspection information 176 to be stored in the storage unit 160 every time the communication unit 110 receives the reception information, the repair information or the inspection information.

The period setting unit 130 includes a failure cause label extracting unit 131, an abnormal section candidate extracting unit 132, an abnormal data characteristic extracting unit 133, a selection information presenting unit 134, a selection instruction acquiring unit 135 and a target period setting unit 136. The learning data generating unit 140 includes a first learning data generating unit 141 and a second learning data generating unit 142.

The period setting unit 130 and the learning data generating unit 140 generate learning data 180 on the basis of the information stored in the storage unit 160.

The learning data 180 includes first learning data 181 and second learning data 182. The first learning data 181 is data regarding an abnormality occurring at the air conditioning apparatus 10. The second learning data 182 is data regarding the running data 172 during normal operation of the air conditioning apparatus 10. The first learning data 181 corresponds to an example of the learning data of the present invention. The second learning data 182 corresponds to an example of normal period learning data of the present invention. Further, normal operation of the present embodiment corresponds to non-abnormal running in the present invention.

In the following description, a period during which it is regarded as an abnormality occurring at the air conditioning apparatus 10 will be set as an abnormal section. Meanwhile, operation of the air conditioning apparatus 10 while an abnormality does not occur will be referred to as normal operation, and a period during which the air conditioning apparatus 10 performs normal operation will be set as a normal section.

The abnormal section corresponds to an example of a target period of the present invention. Further, an abnormality of the air conditioning apparatus 10 or details of the abnormality corresponds to an example of a running state of equipment of the present invention. Still further, the running data 172 corresponds to an example of the running information. Further, the repair and inspection information of the present invention includes information corresponding to the repair information 175, and may include any one or more among the alarm data 173, the reception information 174 and the inspection information 176. The normal section corresponds to an example of the normal operation period of the present invention.

In the processing which will be described later, the information processing apparatus 100 sets repair date included in the repair information 175 as a candidate for an end point of the abnormal section. Because, at the repair date, an abnormality of the air conditioning apparatus 10 is solved, it is reasonable to set the repair data as the candidate for the end point of the abnormal section. The repair date is a candidate for the end point, and date or date and time different from the repair date can be set as the end point of the abnormal section through operation by the worker U which will be described later.

A start point of the abnormal section can be selected from a plurality of sets of date and time. For example, the alarm issuing date and time of the alarm data 173, the reception date and time of the reception information 174 and the inspection date and time of the inspection information 176 are all appropriate as the start point of the abnormal section, and can be said as a candidate for the start point.

Further, the setting change date and time included in the repair information 175 may be set as the candidate for the start point, because there is a possibility that inappropriate setting of the operation of the air conditioning apparatus 10 may cause an abnormality of the air conditioning apparatus 10. For example, if a setting value on a low pressure side of a refrigerant pressure is higher than an appropriate range, there is a case where a state becomes a state where cooling is poor.

The start point of the abnormal section is selected from, for example, the above-described candidates. Further, as the end point of the abnormal section, the above-described candidates or date or date and time different from the above-described candidates are designated. As the start point is closer to the end point, the abnormal section is shorter, and as the start point is farther from the end point, the abnormal section is longer.

The normal section may be set at an entire period except the abnormal section. Further, the normal section may be set as a period during which the worker U judges that an abnormality does not obviously occur in the period except the abnormal section.

The period setting unit 130 determines the normal section and the abnormal section to appropriately generate the first learning data 181 and the second learning data 182. This operation is performed for each abnormality generated at the air conditioning apparatus 10.

The failure cause label extracting unit 131 extracts information relating to details of the failure such as repair details, a replaced part and a failure cause from the repair information 175 corresponding to a target abnormality, as a label. Further, the failure cause label extracting unit 131 extracts information such as a type of equipment, an installation condition and layout from the equipment attribute information 171 as a label. The label may include an equipment ID and a skill of a person in charge.

The abnormal section candidate extracting unit 132 extracts date and time which can be the start point and the end point of the abnormal section concerning a target abnormality from the information in the storage unit 160. Specifically, the abnormal section candidate extracting unit 132 acquires the alarm issuing date and time of the alarm data 173, the reception date and time of the reception information 174, the repair date and time of the repair information 175, and the inspection date and time of the inspection information 176. Further, the abnormal section candidate extracting unit 132 sets date and time at which setting change has been performed among the repair date and time of the repair information 175 as the setting change date and time. The setting change date and time are processed separately from the repair date and time.

The date and time included in the alarm data 173, the reception information 174, the repair information 175 and the inspection information 176 may be date. That is, the date and time do not have to include time information. In this case, the abnormal section candidate extracting unit 132 extracts information of date in place of date and time. Further, the abnormal section candidate extracting unit 132 may add time information to the extracted date. The time information to be added by the abnormal section candidate extracting unit 132 is preferably set in advance. The set time is arbitrary, and is, for example, twelve o'clock at midnight or twelve o'clock at noon. In a similar manner, information of date can be utilized in place of date and time also in various processing relating to date and time which will be described below.

The abnormal data characteristic extracting unit 133 extracts data relating to a label extracted by the failure cause label extracting unit 131 from the running data 172. Because the running data 172 includes measurement values and setting values of a number of items, the abnormal data characteristic extracting unit 133 selects data of an item or content relating to the extracted label. The item or content of data to be selected by the abnormal data characteristic extracting unit 133 is, for example, set in association with a label in advance. Particularly, the items of data are set in association with individual labels or combination of labels.

Further, the abnormal data characteristic extracting unit 133 extracts data in a period corresponding to the date and time extracted by the abnormal section candidate extracting unit 132 among the selected data of the item or the content. Specifically, the abnormal data characteristic extracting unit 133 extracts data in a period from the earliest date and time to the latest date and time among the date and time extracted by the abnormal section candidate extracting unit 132.

The selection information presenting unit 134 generates data for presenting the date and time extracted by the abnormal section candidate extracting unit 132 and the running data extracted by the abnormal data characteristic extracting unit 133 to the worker U and transmits the data to the worker terminal 30.

The selection instruction acquiring unit 135 acquires an instruction input by the worker U on the basis of the data presented by the selection information presenting unit 134.

The target period setting unit 136 sets the abnormal section and the normal section on the basis of the instruction acquired by the selection instruction acquiring unit 135.

The first learning data generating unit 141 of the learning data generating unit 140 acquires the running data in the abnormal section from the running data 172. The first learning data generating unit 141 generates the first learning data 181 on the basis of the data acquired from the running data 172 and the label extracted by the failure cause label extracting unit 131. That is, the first learning data 181 is labeled data to which a label regarding an abnormality of the air conditioning apparatus 10 is attached.

The first learning data generating unit 141 may generate the first learning data 181 by utilizing the equipment ID extracted by the failure cause label extracting unit 131. In this case, for example, the first learning data 181 becomes labeled data classified with the equipment ID.

The second learning data generating unit 142 acquires the running data in the normal section from the running data 172 to generate second learning data 182. The second learning data 182 includes data during normal operation of the air conditioning apparatus 10, and has an attribute of data during normal operation without a label attached. Further, a label indicating data during normal operation may be added to the data included in the second learning data 182.

The learning unit 150 includes a model generating unit 151, an abnormality detection model executing unit 152, a failure diagnosis model executing unit 153 and a failure prediction model executing unit 154.

The model generating unit 151 causes a machine learning model to execute machine learning such as, so-called deep learning by utilizing the second learning data 182, to generate the abnormality detection model 191.

The information processing apparatus 100 corresponds to an example of a learning apparatus of the present invention.

The abnormality detection model 191 is executed by the abnormality detection model executing unit 152. The abnormality detection model executing unit 152 is AI which estimates whether or not the air conditioning apparatus 10 is normally operating for input of the running data 172, and outputs an estimation result. More specifically, the abnormal detection model executing unit 152 periodically or constantly executes operation of analyzing the running data 172, and, in a case where it is estimated that the air conditioning apparatus 10 is put into a running state different from a normal state, estimates that an abnormality occurs, and makes a notification. Note that functions of the abnormality detection model 191 are not limited to a function of estimating whether or not the air conditioning apparatus 10 is normally operating. For example, the abnormality detection model 191 may periodically or constantly output a difference between the running state of the air conditioning apparatus 10 indicated by the running data 172 and normal operation as a numerical value. The numerical value in this case may be a so-called degree of abnormality.

The model generating unit 151 causes the machine learning model to learn the first learning data 181 and the second learning data 182 to generate the failure diagnosis model 192. The model generating unit 151 executes, for example, supervised learning using the first learning data 181 which is labeled data, to generate the failure diagnosis model 192.

The model generating unit 151 causes the machine learning model to learn the first learning data 181 and the second learning data 182 to generate the failure prediction model 193. The model generating unit 151 executes learning including correlation among a plurality of abnormalities occurring at the air conditioning apparatus 10 by analyzing the first learning data 181. Here, the number of abnormalities can be counted, for example, assuming that one piece of repair information 175 corresponds to one abnormality.

In a case where the first learning data 181 includes an equipment ID or in a case where the first learning data 181 includes data classified with an equipment ID, the model generating unit 151 may cause the machine learning model to learn correlation among a plurality of abnormalities occurring at the same air conditioning apparatus 10.

The failure diagnosis model 192 is executed by the failure diagnosis model executing unit 153. The failure diagnosis model executing unit 153 is AI which estimates a cause of an abnormality on the basis of the running data 172 before and after the abnormality occurs in a case where the abnormality occurs at the air conditioning apparatus 10.

A timing at which the failure diagnosis model executing unit 153 executes estimation can be arbitrarily set. For example, the failure diagnosis model executing unit 153 may execute estimation by being triggered by the communication unit 110 receiving the alarm data 173, the reception information 174 or the repair information 175. Further, the failure diagnosis model executing unit 153 may perform estimation by being triggered by the abnormality detection model executing unit 152 notifying occurrence of an abnormality.

The failure prediction model 193 is executed by the failure prediction model executing unit 154. The failure prediction model executing unit 154 estimates a cause of an abnormality which will occur in the future and/or abnormality occurrence time on the basis of the cause of the abnormality occurring at the air conditioning apparatus 10 and the running data 172.

A timing at which the failure prediction model executing unit 154 executes estimation can be arbitrarily set. For example, the failure prediction model executing unit 154 may execute estimation by being triggered by the communication unit 110 receiving the alarm data 173, the reception information 174 or the repair information 175. Further, the failure prediction model executing unit 154 may execute estimation by acquiring an estimation result of the failure diagnosis model executing unit 153 every time the failure diagnosis model executing unit 153 performs estimation.

The learning unit 150 updates the abnormality detection model 191 by the model generating unit 151. For example, every time the second learning data generating unit 142 updates the second learning data 182, the learning unit 150 updates the abnormality detection model 191 by causing the abnormality detection model 191 to learn the updated second learning data 182. In a similar manner, in a case where the first learning data 181 or the second learning data 182 is updated, the model generating unit 151 causes the failure diagnosis model 192 and the failure prediction model 193 to perform learning on the basis of the updated data.

By the way, the number of times of occurrence of an abnormality is small for a while since the air conditioning apparatus 10 has started running. Therefore, an amount of data included in the first learning data 181, that is, the number of samples is small, and learning of the failure diagnosis model 192 and the failure prediction model 193 is less likely to proceed.

The information processing apparatus 100 in the present embodiment encourages increase of an amount of data of the first learning data 181 by performing adjustment so that the amount of data to be acquired by the first learning data generating unit 141 increases in a stage where the first learning data 181 does not include a sufficient number of pieces of data. This operation will be described below.

### [3. Operation of information processing apparatus]

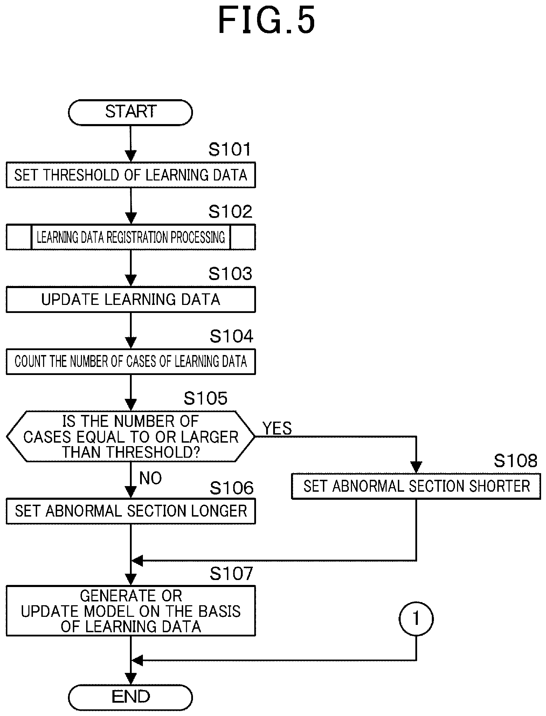

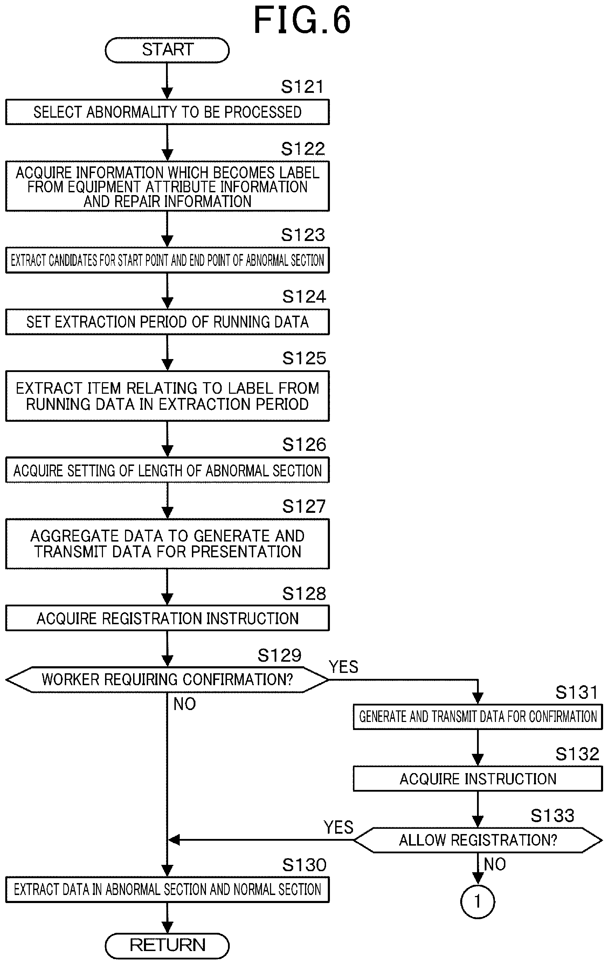

FIG. 5 and FIG. 6 are flowcharts illustrating operation of the information processing apparatus 100. Operation from step S101 to S106 and S108 in FIG. 5 is operation for generating the learning data 180, and is called a learning data generation phase. There is no restriction in an execution order of the above-described collection phase and the learning data generation phase, and, for example, the information processing apparatus 100 can execute the collection phase and the learning data generation phase in parallel.

The learning data generating unit 140 sets a threshold for the number of cases of the learning data 180 (step S101). The threshold set in step S101 is a criterion for determining whether or not the first learning data 181 includes a sufficient amount of data, and is compared with the number of cases of the first learning data 181. The number of cases of the first learning data 181 is an index of an amount of data included in the first learning data 181, and, for example, refers to the number of pieces of running data included in the first learning data 181. As described above, the air conditioning apparatus 10 periodically acquires measurement values, or the like. A measurement value, or the like, acquired by the air conditioning apparatus 10 at one time is counted as one piece of running data and as one case. In this case, the number of cases can be also paraphrased as the number of samples.

Subsequently, the period setting unit 130 and the learning data generating unit 140 execute data registration processing for extracting data to be added to the learning data 180 (step S102). Details of the data registration processing will be described later.

The learning data generating unit 140 updates the first learning data 181 and the second learning data 182 so as to include the data extracted in step S102 (step S103).

The learning data generating unit 140 determines whether or not the number of cases of the first learning data 181 updated in step S103 is equal to or larger than the threshold (step S105). In a case where the number of cases is smaller than the threshold (step S105; No), the learning data generating unit 140 performs setting of making the abnormal section longer (step S106). By this means, the number of cases of data included in the abnormal section increases, which encourages increase of the amount of data of the first learning data 181.

Thereafter, the model generating unit 151 performs learning based on the updated learning data 180 to generate or update the abnormality detection model 191, the failure diagnosis model 192 and the failure prediction model 193 (step S107).

Meanwhile, in a case where the number of cases of the first learning data 181 is equal to or larger than the threshold (step S105; Yes), the learning data generating unit 140 performs setting of making the abnormal section shorter (step S108).

FIG. 6 illustrates details of the learning data registration processing.

In the learning data registration processing, an abnormality of a processing target is selected first (step S121). Specifically, any one of the repair information 175 created regarding an abnormality is selected. In step S121, an abnormality may be selected by the period setting unit 130 or may be selected through operation of the worker terminal 30.

The failure cause label extracting unit 131 extracts information which becomes a label described above from the repair information 175 and the equipment attribute information 171 corresponding to the target abnormality (step S122).

The abnormal section candidate extracting unit 132 extracts date and time which become a candidate for the start point and date and time which become a candidate for the end point with reference to the alarm data 173 relating to the target abnormality, the reception information 174, the repair information 175 and the inspection information 176 (step S123). In step S123, the abnormal section candidate extracting unit 132 specifies information relating to the target abnormality on the basis of the repair date and time of the repair information 175 and the equipment ID.

Subsequently, the abnormal data characteristic extracting unit 133 sets an extraction period corresponding to the date and time extracted by the abnormal section candidate extracting unit 132 (step S124). The extraction period is set at a period including the earliest date and time among the candidates for the start point, and the date and time of the end point. Further, in step S124, it is preferable to set the extraction period including a period before the candidate for the start point and a period after the candidate for the end point so as to make it easy to select the normal section.

The abnormal data characteristic extracting unit 133 extracts running data of an item relating to the label extracted by the failure cause label extracting unit 131 among the running data 172 in the extraction period (step S125).

The selection information presenting unit 134 acquires settings regarding a length of the abnormal section set in step S106 or step S108 (step S126).

Here, the data to be extracted by the abnormal data characteristic extracting unit 133 will be described.

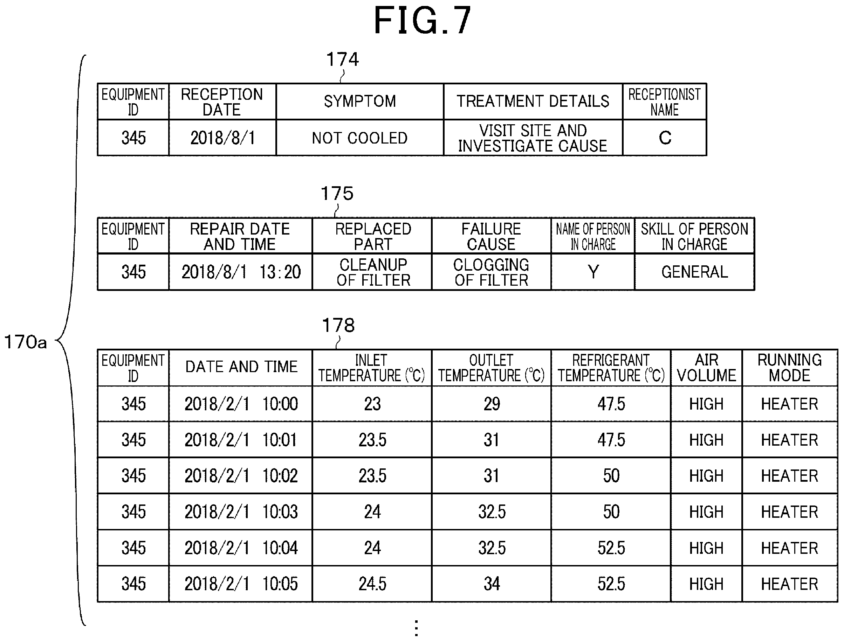

FIG. 7, FIG. 8 and FIG. 9 are respectively pattern diagrams illustrating a configuration example of data to be used for generating the learning data 180.

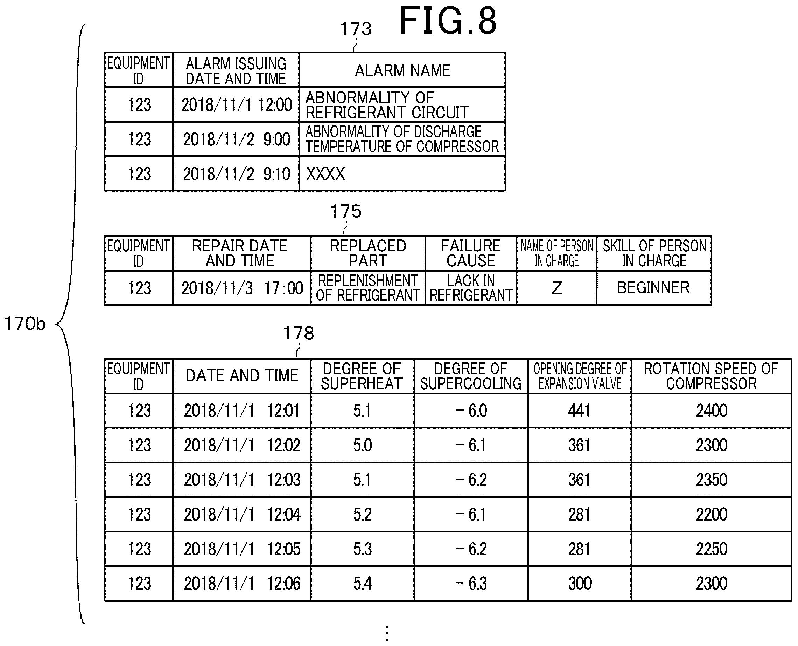

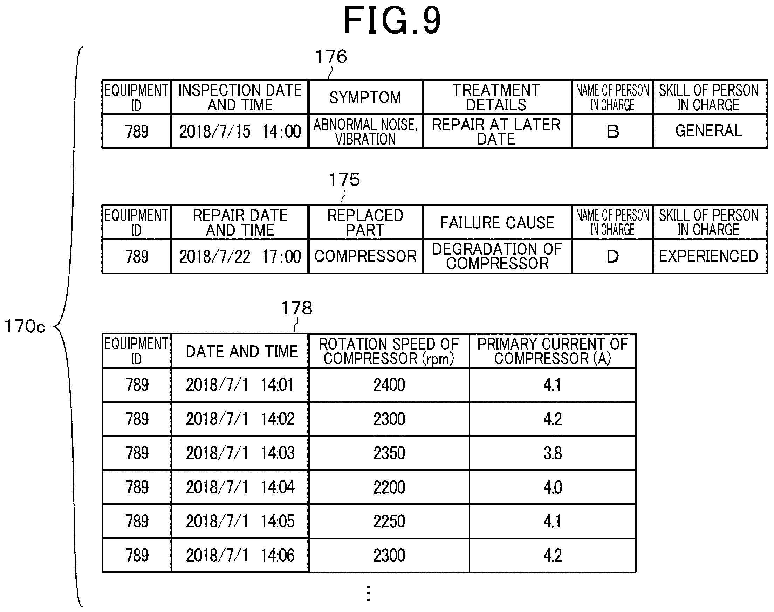

FIG. 7 illustrates the reception information 174 and the repair information 175 regarding one abnormality, and extracted data 178 extracted by the abnormal data characteristic extracting unit 133 from the running data 172. Combination of these pieces of data will be referred to as a data set 170a. Note that the extracted data 178 in FIG. 7 illustrates only part of the data in an extraction period, and FIG. 8 and FIG. 9 similarly illustrate only part of data in the extraction period.

The data set 170a does not include the alarm data 173 and the inspection information 176. That is, all of the alarm data 173 corresponding to an abnormality which is a target of the learning data registration processing, the reception information 174 and the inspection information 176 are not necessarily stored in the data set 170a.

As described above, the reception information 174 includes an equipment ID, reception date and time, a symptom, treatment details and a receptionist name. The reception information 174 in FIG. 7 includes reception date in place of reception date and time. Further, the repair information 175 includes information indicating that a failure cause is clogging of a filter, and the filter is cleaned up instead of a part being replaced. The failure cause label extracting unit 131 extracts "cleanup of a filter", "clogging of a filter", and "a skill of a person in charge" from the repair information 175 as labels. Further, the failure cause label extracting unit 131 extracts a type of equipment, an installation condition, layout, or the like, from the equipment attribute information 171 which is not illustrated, as labels.

Items of the running data 172 corresponding to the labels of "cleanup of a filter" and "clogging of a filter", and the labels extracted from the equipment attribute information 171 are, for example, measurement values of an inlet temperature, an outlet temperature and a refrigerant temperature, and setting values of an air volume and an running mode. The extracted data 178 includes data of respective items selected relating to the labels in addition to the equipment ID and the date and time.

A data set 170b illustrated in FIG. 8 includes the alarm data 173, the repair information 175 and the extracted data 178. The labels extracted from the repair information 175 are "replenishment of a refrigerant" and "lack of a refrigerant". Items of the running data 172 corresponding to the extracted labels are, for example, a degree of superheat, a degree of supercooling, a degree of opening of an expansion valve, and rotation speed of a compressor, and data of these items is included in the extracted data 178.

In the example in FIG. 8, the alarm data 173 includes data of alarms of three times, which indicates that an alarm has been output three times concerning one abnormality of the air conditioning apparatus 10.

A data set 170c illustrated in FIG. 9 includes the inspection information 176, the repair information 175 and the extracted data 178. The labels extracted from the repair information 175 are "a compressor" and "degradation of a compressor". Items of the running data 172 corresponding to the extracted labels are, for example, rotation speed of the compressor, and a primary current of the compressor, and data of these items is included in the extracted data 178.

In this manner, because data relating to the labels is extracted from the running data 172 including a number of items of data by the abnormal data characteristic extracting unit 133, it is possible to utilize data which is likely to be related to the abnormality as the learning data 180.

The selection information presenting unit 134 aggregates the candidate for the start point of the abnormal section extracted by the abnormal section candidate extracting unit 132, the candidate for the end point of the abnormal section, and the running data extracted by the abnormal data characteristic extracting unit 133 to generate data for presentation, and transmits the data for presentation to the worker terminal 30b (step S127 in FIG. 6).

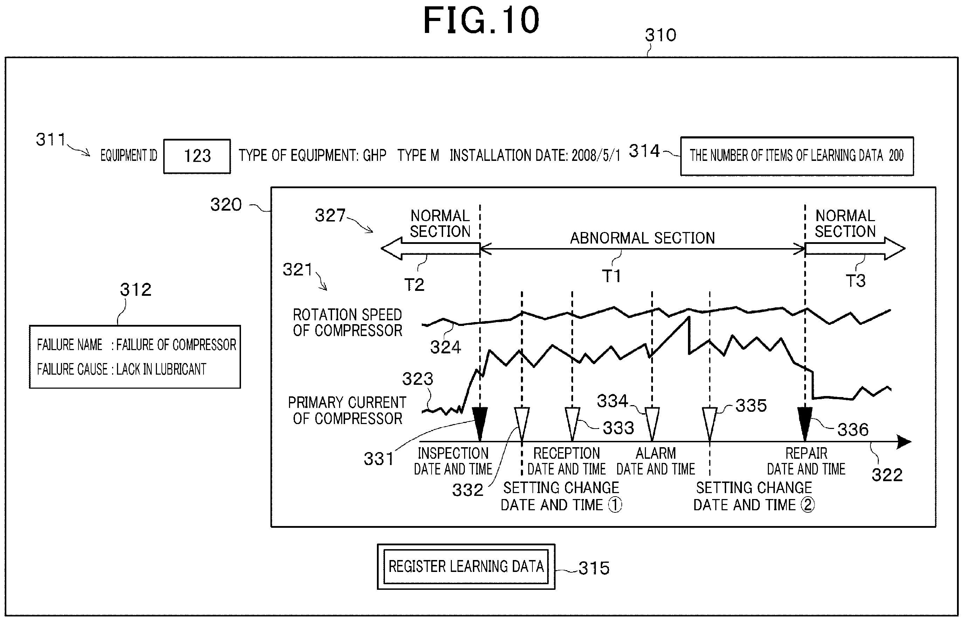

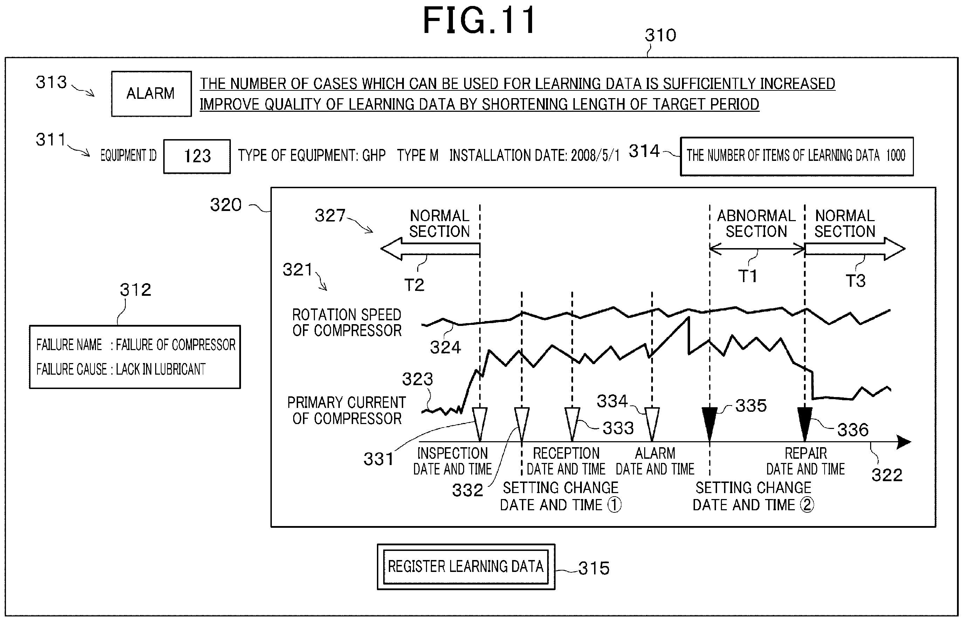

FIG. 10 and FIG. 11 are views illustrating display examples at the worker terminal 30b, and are examples where the data for presentation generated by the selection information presenting unit 134 is displayed on a touch panel 31b.

On a presentation screen 310 illustrated in FIG. 10, an equipment information display portion 311, a content display portion 312, a case number display portion 314 and a registration instruction button 315 are provided. In the equipment information display portion 311, information extracted from the equipment attribute information 171 is displayed. In the content display portion 312, information such as a failure cause extracted from the repair information 175 concerning a failure which is a target of the learning data registration processing is displayed. In the case number display portion 314, the number of cases of the first learning data 181 at a time point at which the learning data registration processing is executed is displayed. The registration instruction button 315 is a button which functions as an operating unit to be used by the worker U3 to give an instruction of registration.

On the presentation screen 310, a period display region 320 is provided. The period display region 320 has a running data display portion 321 and a section display portion 327.

In the running data display portion 321, a graph of measurement values extracted from the running data 172 is displayed along a time axis 322. In the example in FIG. 10, a graph 323 of a primary current of the compressor and a graph 324 of rotation speed of the compressor are displayed. Further, on the time axis 322, date and time symbols 331, 332, 333, 334 and 335 indicating date and time which is a candidate for the start point of the abnormal section, and a date and time symbol 336 indicating date and time which is a candidate for the end point of the abnormal section are provided. The candidate for the start point in the example in FIG. 10 is the inspection date and time, the setting change date and time of two times, the reception date and time and the alarm date and time. Further, the candidate for the end point is the repair date and time.

In the section display portion 327, the abnormal section T1 and the normal section T2 are displayed with arrows in accordance with the time axis 322.

The normal section T2 is set at a period other than the abnormal section T1, specifically, the start point of the abnormal section T1 matches the end point of the normal section T2, and the end point of the abnormal section T1 matches the start point of the normal section T2.

The start point and the end point of the normal section T2 do not have to match the end point and the start point of the abnormal section T1. That is, the start point and the end point of the normal section T2 may be able to be set independently of the end point and the start point of the abnormal section T1. The presentation screen 310 in FIG. 10 is a candidate for a screen to be presented by the selection information presenting unit 134 to the worker U3 in step S127. That is, the selection information presenting unit 134 presents an example where the abnormal section T1 is continuous to the normal section T2 as a candidate. Therefore, it is possible to set the start point and the end point of the normal section T2 at time and date which do not match the end point and the start point of the abnormal section T1 through operation by the worker U3.

Further, the normal section T2 may be set at an entire period between the start point and the end point indicated in the section display portion 327. In this case, a period from the start point of the normal section T2 in the section display portion 327 until the start point of the abnormal section T1 designated concerning an abnormality which occurs after the current target abnormality becomes the normal section T2.

Alternatively, a length of the normal section T2 may be set in advance. This length is temporarily set as a normal section length TL. The normal section length TL can be set in advance in units of day, hour, minute or second. Further, it is also possible to enable setting of the normal section length TL through operation to the presentation screen 310. In this case, the normal section T2 is a period having the normal section length TL from the start point and the end point of the normal section T2 designated in the section display portion 327. In the example in FIG. 10, the normal section T2 is a period dating back from the inspection date and time by the normal section length TL, and a period from the repair date and time until the normal section length TL elapses, and has a length double the set normal section length TL. Further, the normal section length TL from the end point of the normal section T2 and the normal section length TL from the start point of the normal section T2 may be set at different lengths.

FIG. 10 illustrates a display example based on the data for presentation to be generated in a case where setting of making the abnormal section longer is made. Therefore, display which encourages the worker U3 to set the abnormal section longer is provided. Specifically, the date and time symbol 331 indicating date and time farthest from the candidate for the end point among the candidates for the start point is displayed in a display state different from those of other date and time symbols 332 to 335. Further, the repair date and time is presented as the candidate for the end point. That is, the date and time symbol 336 indicating the end point is displayed in a display state different from those of the date and time symbols 332 to 335.

Further, on the presentation screen 310 in FIG. 10, the start point of the normal section T2 is set as the repair date and time, and the inspection date and time is presented as the candidate for the end point of the normal section T2. In other words, the candidate for the end point of the normal section T2 is set at the date and time closest to the start point of the normal section T2 in a period except the abnormal section T1. In a case where the normal section T2 is designated in accordance with this candidate, the normal section T2 becomes the longest. In the example in FIG. 10, the number of cases of the first learning data 181 is small, and the number of cases of the second learning data 182 regarding the normal section T2 is also small. Therefore, by setting the normal section T2 longer, it is possible to encourage increase of the number of cases of the second learning data 182.

On the presentation screen 310, before the registration instruction button 315 is operated, the abnormal section T1 and the normal section T2 can be changed through operation of the worker U3. For example, one of the candidates for the start point can be selected through touch operation on one of the date and time symbols 331, 332, 333, 334 and 335. In a case where the candidate for the start point is selected, the selection information presenting unit 134 updates the data for presentation, so that display of the presentation screen 310 is updated. For example, display of the abnormal section T1 is updated in accordance with the selected candidate for the start point.

The worker U3 judges time at which the running state relating to an abnormality displayed in the content display portion 312 is started by viewing the graphs 323 and 324 on the presentation screen 310, and selects the start point from the candidates for the start point of the abnormal section T1. Further, the worker U3 designates the end point. Still further, the worker U3 designates the end point and the start point of the normal section T2 in a case where the worker U3 intends to avoid the normal section T2 from being continuous to the abnormal section T1. After the presentation screen 310 is updated in accordance with the operation by the worker U3, the worker U3 operates the registration instruction button 315 if the updated abnormal section T1 and normal section T2 are as intended.

If the registration instruction button 315 is operated, the date and time of the start point and the end point of the abnormal section T1 selected by the worker U3 and an instruction of registration are transmitted from the worker terminal 30b to the information processing apparatus 100. This instruction may include date and time of the start point and the end point of the normal section T2.

Note that, on the presentation screen 310, operation of setting the start point of the abnormal section T1 at a position other than the date and time symbols 331, 332, 333, 334 and 335 on the time axis 322 may be performed. For example, it is also possible to enable operation of setting the start point between the date and time symbol 332 and the date and time symbol 333.

Further, in a similar manner, it is also possible to perform operation of setting the end point of the abnormal section T1 at a position other than the date and time symbol 336. For example, it is possible to perform operation of setting the end point at positions of the date and time symbols 331, 332, 333, 334 and 335. Still further, it is also possible to enable operation of changing the position of the end point so that the end point is set at the position other than the above-described date and time symbols. Display of the section display portion 327 is updated every time these instructions of changing the end point of the abnormal section T1 are given. Further, if the registration instruction button 315 is operated, the date and time of the start point and the end point selected by the worker U3 and the instruction of registration are transmitted from the worker terminal 30b to the information processing apparatus 100.

The presentation screen 310 in FIG. 11 is a display example based on the data for presentation to be generated in a case where setting of making the abnormal section T1 shorter is performed. The number of cases displayed in the case number display portion 314 is different from that in the example in FIG. 10, and is equal to or larger than the threshold.

On the presentation screen 310 in FIG. 11, the date and time symbol 335 indicating date and time closest to the repair date and time which is a candidate for the end point, among the candidates for the start point is displayed in a display state different from those of other date and time symbols 331 to 334. Further, in a similar manner to the example illustrated in FIG. 10, the date and time symbol 336 is displayed in a display state different from those of the date and time symbols 331 to 334 as the candidate for the end point.

Further, in the example in FIG. 11, on the presentation screen 310, an attention calling display portion 313 is provided. In the attention calling display portion 313, a message which makes a notification that there is a sufficient number of cases of the first learning data 181 and which encourages setting of making the abnormal section T1 shorter is displayed.

Because the worker U1 confirms a state of the air conditioning apparatus 10 at the repair date and time, it is certain that an abnormality occurs. It can be said that quality of the data extracted from the running data 172 is higher as the abnormal section T1 is shorter. That is, in the extracted data, a ratio of data relating to an abnormality is high, and a ratio of data irrelevant to an abnormality is low. In a case where the number of cases of the first learning data 181 reaches a sufficient number, improvement of quality of the first learning data 181 is useful. Therefore, the selection information presenting unit 134 encourages the worker U3 to make the abnormal section T1 shorter by the attention calling display portion 313.

Further, on the presentation screen 310 in FIG. 11, the start point of the normal section T2 is set as the repair date and time, and the inspection date and time is presented as the candidate for the end point of the normal section T2. In other words, the date and time farthest from the start point of the normal section T2 is set as the candidate for the end point of the normal section T2.

In the example in FIG. 11, the start point of the abnormal section T1 does not match the end point of the normal section T2. As illustrated in FIG. 11, the selection information presenting unit 134 can also present the normal section T2 as the period not including the candidate for the start point of the abnormal section T1.

In the example in FIG. 11, because the number of cases of the first learning data 181 has increased, the number of cases of the second learning data 182 regarding the normal section T2 has also increased. Therefore, as illustrated in FIG. 11, the selection information presenting unit 134 presents the normal section T2 so as to be away from the abnormal section T1. In this example, it is expected that quality of the second learning data 182 is improved.

Further, the selection information presenting unit 134 may present candidates in accordance with the length of the abnormal section T1 when presenting the candidates for the start point and the end point of the normal section T2. For example, the selection information presenting unit 134 may set a period other than the abnormal section T1 as the normal section T2 in a case where the abnormal section T1 is long, and may set and present the candidates so that the abnormal section T1 is not adjacent to the normal section T2 in a case where the abnormal section T1 is short.

If the registration instruction button 315 on the presentation screen 310 is operated, the selection instruction acquiring unit 135 acquires an instruction transmitted by the worker terminal 30b (step S128 in FIG. 6). Here, the selection instruction acquiring unit 135 determines whether or not the worker U who has operated the registration instruction button 315 requires confirmation by other workers U (step S129). A case where the worker U requires confirmation by other workers U is a case where a skill of the worker U who has operated the registration instruction button 315 is equal to or lower than a determined level.

In a case where the worker U does not require confirmation by other workers U (step S129; No), the target period setting unit 136 extracts data in the abnormal section and the normal section from the running data 172 (step S130), and the processing transitions to step S103.

In a case where the worker U requires confirmation by other workers U (step S129; Yes), the selection information presenting unit 134 generates data for confirmation and transmits the data for confirmation to the worker terminal 30c (step S131). In this case, on the touch panel 31c, information indicating details operated by the worker U3 on the presentation screen 310 or the presentation screen 310 at a time point at which the registration instruction button 315 has been operated is displayed. The worker U4 judges whether or not to allow operation by the worker U3 in terms of whether or not the abnormal section T1 and the normal section T2 set by the worker U3 is appropriate, and inputs the judgment result to the worker terminal 30c. Content input by the worker U4 is transmitted from the worker terminal 30c to the information processing apparatus 100.

The selection instruction acquiring unit 135 acquires an instruction received by the communication unit 110 from the worker terminal 30c (step S132), and determines whether or not registration by the instruction of the worker U3 is allowed (step S133). In a case where the registration is not allowed (step S133; No), the information processing apparatus 100 finishes the processing.

Further, in a case where the registration is allowed (step S133; Yes), the processing transitions to step S130, data is extracted, and the processing transitions to step S103.

The processing illustrated in FIG. 5 and FIG. 6 is repeatedly executed every time the alarm data 173, the reception information 174, the repair information 175 and the inspection information 176 are updated, or every time the running data 172 increases by a predetermined amount. Because the processing in step S101 does not have to be repeated, the processing in step S101 only requires to be executed as necessary.

Further, in a case where setting of making the abnormal section shorter is performed in step S108, the information processing apparatus 100 may execute the processing from step S102 to S103 again on cases which have been utilized for generating the first learning data 181 in the past, to recreate the first learning data 181. In this case, it is possible to improve overall quality of the first learning data 181, so that it is possible to generate the failure diagnosis model 192 and the failure prediction model 193 which enable estimation with higher accuracy.

As described above, the information processing apparatus 100 of the embodiment includes a running information acquiring unit 121 configured to acquire running data of the air conditioning apparatus 10, a repair and inspection information acquiring unit 122 configured to acquire the repair information 175 including details of repair and inspection of the air conditioning apparatus 10 and date or date and time of the repair and inspection, the period setting unit 130 configured to set the abnormal section, and the learning data generating unit 140 configured to generate the first learning data 181 in which a running state of the air conditioning apparatus 10 is associated with the running data, on the basis of the running data in the abnormal section, wherein the period setting unit 130 presents date or date and time of repair of the air conditioning apparatus 10 included in the repair information 175 as the candidate for the end point of the abnormal section, presents the date or date and time so as to be able to be selected as the candidate for the start point of the abnormal section, sets the selected dates or dates and times as the start point and the end point of the abnormal section, and sets the date or date and time farther from the end point as the candidate for the start point to be presented in a case where the number of cases included in the first learning data 181 is smaller than the threshold, than the candidate for the start point to be presented in a case where the number of cases included in the first learning data 181 is equal to or larger than the threshold.

According to the information processing apparatus 100, and the information processing method to be executed by the information processing apparatus 100, it is possible to secure an amount of data of the first learning data 181 by setting the abnormal section relatively longer in a case where the number of cases of the first learning data 181 is small. Further, by setting the abnormal section relatively shorter in a case where the number of cases is equal to or larger than the threshold, it is possible to select running data particularly appropriate for learning, so that it is possible to generate the first learning data 181 with high accuracy. Still further, because the end point of the abnormal section is not shifted from the date or date and time of the repair, it is possible to prevent the first learning data 181 from becoming data irrelevant to the repair, so that it is possible to maintain quality as the first learning data 181.

Therefore, regardless of whether the number of cases of abnormalities occurring at the air conditioning apparatus 10 is large or small, it is possible to obtain the first learning data 181 appropriate for learning the running state of the air conditioning apparatus 10 by the learning unit 150.

The period setting unit 130 sets the date or date and time farthest from the end point among the date or date and time included in the alarm data 173, the reception information 174, the repair information 175, the inspection information 176, or the like, as the candidate for the start point in a case where the number of cases included in the first learning data 181 is smaller than the threshold, and sets date or date and time closest to the end point as the candidate for the start point in a case where the number of cases included in the first learning data 181 is equal to or larger than the threshold.

For example, in the example of the presentation screen 310 illustrated in FIG. 10 and FIG. 11, in a case where the number of cases of the first learning data 181 is smaller than the threshold, a display state of the date and time symbol 331 is changed by the inspection date and time being set as the candidate for the start point, and, in a case where the number of cases of the first learning data 181 is equal to or larger than the threshold, the display state of the date and time symbol 335 is changed by the setting change date and time being set as the candidate for the start point.

According to this, in a case where the number of cases of the first learning data 181 is small, it is possible to set the longest period including the running data relating to the repair as the abnormal section, so that it is possible to secure an amount of the first learning data 181. Further, in a case where the number of cases included in the first learning data 181 is sufficient, it is possible to improve accuracy of the first learning data 181 by making the abnormal section substantially shorter.

The repair and inspection information includes any one or more among date or date and time at which inspection of the air conditioning apparatus 10 has been executed, date or date and time at which information regarding repair and inspection of the air conditioning apparatus 10 has been received, date or date and time at which setting of the air conditioning apparatus 10 has been changed, and date or date and time at which the air conditioning apparatus 10 has output an alarm regarding the running state, and date or date and time at which repair of the air conditioning apparatus 10 has been executed. Specifically, the period setting unit 130 and the learning data generating unit 140 acquire and utilize at least one of the alarm data 173, the reception information 174 and the inspection information 176, and the repair information 175.

According to this, it is possible to obtain the first learning data 181 and the second learning data 182 by utilizing the running data relating to the repair of the air conditioning apparatus 10.

The abnormal section is a period during which the running state of the air conditioning apparatus 10 is judged as a specific state, and the period setting unit 130 may set the start point of the abnormal section on the basis of one of the date or date and time included in the above-described repair and inspection information, or a symptom found through the inspection of the air conditioning apparatus 10 and a difference between the running data acquired by the running information acquiring unit 121 and the running data in non-abnormal running of the air conditioning apparatus 10. For example, a period during which the running data 172 different from the running data 172 in the normal section is obtained may be set as the abnormal section, and may be presented through the presentation screen 310. In this case, it is possible to easily obtain the first learning data 181 corresponding to the running state of the air conditioning apparatus 10.

As the running data in normal running of the air conditioning apparatus 10, one of running data obtained upon operational design of the air conditioning apparatus 10, running data in test running of the air conditioning apparatus 10, and running data during running while operation of the air conditioning apparatus 10 is judged as normal operation, can be set. The information processing apparatus 100 of the present embodiment generates the second learning data 182 using the running data during running while operation of the air conditioning apparatus 10 is judged as normal operation as the running data in the normal section. According to this, it is possible to appropriately set the abnormal section and the normal section on the basis of a timing at which various repair and inspection are performed on the air conditioning apparatus 10 or the running data in non-abnormal running of the air conditioning apparatus 10.

The information processing apparatus 100 includes a user DB 162 which stores skill information indicating a skill of the worker U for each worker U who performs operation of selecting the candidate for the start point of the abnormal section, and the period setting unit 130 presents to the worker U4 the running data in the abnormal section set on the basis of operation by the worker U3 corresponding to specific skill information so that whether or not to utilize the running data for generating the first learning data 181 can be selected.

According to this, it is possible to obtain the first learning data 181 with high quality in accordance with a difference in a skill of the worker U who selects the candidate for the start point.

The learning data generating unit 140 generates the first learning data 181 in which equipment attribute information 171 including one of an installation condition of the air conditioning apparatus 10, layout of the air conditioning apparatus 10 and a type of equipment of the air conditioning apparatus 10 is associated with the running data in the abnormal section. Specifically, the learning data generating unit 140 generates the first learning data 181 on the basis of the labels extracted from the equipment attribute information 171 and the running data extracted from the running data 172.

According to this, it is possible to obtain the first learning data 181 corresponding to the type of equipment, the installation condition, the layout, or the like, of the air conditioning apparatus 10.

The information processing apparatus 100 is a learning apparatus including the running information acquiring unit 121 configured to acquire running data of the air conditioning apparatus 10, the repair and inspection information acquiring unit 122 configured to acquire the repair and inspection information including details of the repair and inspection of the air conditioning apparatus 10 and date or date and time of the repair and inspection, the learning data generating unit 140 configured to generate the first learning data 181 on the basis of the running data in the abnormal section set on the basis of the repair and inspection information, and the learning unit 150 configured to learn a condition of the running data associated with the running state of the air conditioning apparatus 10 on the basis of the first learning data 181.

According to this, by learning relation between the running state of the air conditioning apparatus 10 and the running data acquired from the air conditioning apparatus 10, it is possible to predict, diagnose or detect the running state of the air conditioning apparatus 10 with high accuracy.

Further, the information processing apparatus 100 includes the running information acquiring unit 121 configured to acquire the running data of the air conditioning apparatus 10, the repair and inspection information acquiring unit 122 configured to acquire the repair information 175 including details of the repair and inspection of the air conditioning apparatus 10 and date or date and time of the repair and inspection, the period setting unit 130 configured to set the normal section during which operation of the air conditioning apparatus 10 is regarded as normal operation, and the learning data generating unit 140 configured to generate the second learning data 182 in which the running state of the air conditioning apparatus 10 is associated with the running data, on the basis of the running data in the normal section, wherein the period setting unit 130 presents the date or date and time of repair of equipment included in the repair information 175 as the candidate for the start point of the normal section, presents the date or date and time so as to be able to be selected as the candidate for the end point of the normal section, sets the selected dates or dates and times as the start point and the end point of the normal section, sets the end point, and sets date or date and time farther from the start point as the candidate for the end point to be presented in a case where the number of cases included in the first learning data 181 or the second learning data 182 is smaller than the threshold, than the candidates for the end point to be presented in a case where the number of cases included in the first learning data 181 or the second learning data 182 is equal to or larger than the threshold.

In this manner, according to the information processing apparatus 100, and the information processing method to be executed by the information processing apparatus 100, it is possible to present the candidate for the normal section during which operation of the air conditioning apparatus 10 is regarded as normal operation, and, in a case where the number of cases of the second learning data 182 regarding the normal section is small, secure an amount of the second learning data 182 by setting the normal section relatively longer. Further, by setting the normal section relatively shorter in a case where the number of cases is equal to or larger than the threshold, it is possible to select running information particularly appropriate for learning, so that it is possible to generate learning data with high accuracy. Therefore, it is possible to obtain the second learning data 182 appropriate for learning the running state of equipment in a case where the equipment is normally operating.

The period setting unit 130 sets date or date and time farthest from the start point among the date or date and time included in the alarm data 173, the reception information 174, the repair information 175, the inspection information 176, or the like, as the candidate for the end point in a case where the number of cases included in the first learning data 181 or the second learning data 182 is smaller than the threshold, and sets date or date and time closest to the start point among the date or date and time included in the repair and inspection information as the candidate for the end point in a case where the number of cases included in the second learning data 182 is equal to or larger than the threshold.

According to this, in a case where the number of cases of the second learning data 182 is small, by setting the normal section longer, it is possible to secure an amount of the second learning data 182. Further, in a case where the number of cases included in the second learning data 182 is sufficient, by setting the normal section shorter, it is possible to improve accuracy of the second learning data 182.

The period setting unit 130 may set the end point of the normal section on the basis of one of the date or date and time included in the above-described repair and inspection information or a symptom found through the inspection of the air conditioning apparatus 10 and a difference between the running data acquired by the running information acquiring unit 121 and the running data in non-abnormal running of the air conditioning apparatus 10. For example, it is also possible to set the abnormal section on the basis of a difference between the running data in non-abnormal running and the running data of the air conditioning apparatus 10 and set the end point and the start point of the normal section on the basis of the start point and the end point of the abnormal section. In this case, it is possible to easily obtain the second learning data 182 on the basis of the running state of the air conditioning apparatus 10.

The information processing apparatus 100 includes a user DB 162 which stores skill information indicating a skill of the worker U for each worker U who performs operation of selecting the candidate for the end point of the normal section, and the period setting unit 130 presents to the worker U4 the running data in the normal section set on the basis of the operation by the worker U3 corresponding to specific skill information so that whether or not to utilize the running data for generating the second learning data 182 can be selected. According to this, it is possible to obtain the second learning data 182 with high quality in accordance with a difference in a skill of the worker U who selects the candidate for the end point of the normal section.

The learning data generating unit 140 may generate the second learning data 182 in which the equipment attribute information 171 including one of the installation condition of the air conditioning apparatus 10, the layout of the air conditioning apparatus 10 and the type of equipment of the air conditioning apparatus 10 is associated with the running data in the normal section. In this case, it is possible to obtain the second learning data 182 corresponding to the type of equipment, the installation condition, the layout, or the like, of the air conditioning apparatus 10.

### [4. Other embodiments]

Note that, while the present invention has been described on the basis of the embodiment, the present invention is not limited to the present embodiment. Because the embodiment merely illustrates an embodiment of the present invention, change and application can be arbitrarily made within a range not deviating from the gist of the present invention.

For example, in the above-described embodiment, an example has been described where the abnormal section in which an abnormality of the air conditioning apparatus 10 has occurred, and the normal section are set as target periods, and the learning data 180 is generated by extracting the running data 172. The present invention is not limited to this, and can be also applied to other examples where the target periods can be set on the basis of the running state of target equipment. For example, the learning data 180 may be generated for a target period in which the running state of the air conditioning apparatus 10 is particularly favorable.

Further, for example, the information to be processed by the information processing apparatus 100 is not limited to information regarding the air conditioning apparatus 10. For example, the present invention can be applied to a configuration where information regarding various refrigeration equipment such as a refrigerated showcase and a refrigerator is processed, or a configuration where information regarding various apparatuses not including a refrigeration circuit is processed.

Further, while FIG. 3 is a schematic diagram illustrating a functional configuration of the information processing apparatus 100 which is divided in accordance with main processing details to facilitate understanding of the present invention, the configuration may be divided in other manners. Further, the processing of each component may be executed by one hardware unit or may be executed by a plurality of hardware units.

For example, while, in the above-described embodiment, a configuration has been described where the information processing apparatus 100 includes the period setting unit 130, the learning data generating unit 140 and the learning unit 150, the present invention is not limited to this. For example, the learning unit 150 may be configured as an apparatus different from the information processing apparatus 100. In this case, it is only necessary that the apparatus including the learning unit 150 can access the learning data 180 generated by the learning data generating unit 140. Further, a database server which stores the learning data 180 may be configured as an apparatus different from the information processing apparatus 100 and connected to the information processing apparatus 100 using the communication network 40, or other forms may be employed. Further, the processing of each component in FIG. 3 may be executed using one program or may be executed using a plurality of programs.

### Industrial Applicability

As described above, the information processing apparatus according to the present invention and an apparatus to which the information processing method of the present invention is applied can be suitably utilized as an information processing apparatus which can obtain learning data appropriate for learning the running state of equipment in accordance with the number of cases of the running state of the equipment.

### Reference Signs List

- 1: equipment management system
- 10: air conditioning apparatus
- 20: reception terminal
- 30, 30a, 30b, 30c: worker terminal
- 31, 31a, 31b, 31c: touch panel
- 100: information processing apparatus (learning apparatus)
- 120: processing unit
- 121: running information acquiring unit
- 122: repair and inspection information acquiring unit
- 130: period setting unit
- 131: failure cause label extracting unit
- 132: abnormal section candidate extracting unit
- 133: abnormal data characteristic extracting unit
- 134: selection information presenting unit
- 135: selection instruction acquiring unit
- 136: target period setting unit
- 140: learning data generating unit
- 141: first learning data generating unit
- 142: second learning data generating unit
- 150: learning unit
- 151: model generating unit
- 152: abnormality detection model executing unit
- 153: failure diagnosis model executing unit
- 154: failure prediction model executing unit
- 162: user DB
- 171: equipment attribute information
- 172: running data
- 173: alarm data
- 174: reception information
- 175: repair information
- 176: inspection information
- 178: extracted data
- 180: learning data
- 181: first learning data (learning data)
- 182: second learning data
- 190: learning model storage unit
- 191: abnormality detection model
- 192: failure diagnosis model
- 193: failure prediction model

## Claims

1. An information processing apparatus **characterized by** comprising:
a running information acquiring unit (121) configured to acquire running information of equipment;
a repair and inspection information acquiring unit (122) configured to acquire repair and inspection information including details of repair and inspection of the equipment and date or date and time of the repair and inspection;
a period setting unit (130) configured to set a target period; and
a learning data generating unit (140) configured to generate learning data in which a running state of the equipment is associated with the running information, on a basis of the running information in the target period,
wherein the period setting unit presents date or date and time of repair of the equipment included in the repair and inspection information as a candidate for an end point of the target period, presents date or date and time so as to be able to be selected as a candidate for a start point of the target period, sets the selected dates or dates and times as the start point and the end point of the target period, and
sets date or date and time farther from the end point as the candidate for the start point to be presented in a case where a number of cases included in the learning data is smaller than a threshold, than the candidate for the start point to be presented in a case where the number of cases included in the learning data is equal to or larger than the threshold.

2. The information processing apparatus according to claim 1,
wherein, in a case where a number of cases included in the learning data is smaller than a threshold, the period setting unit sets date or date and time farthest from the end point among date or date and time included in the repair and inspection information as the candidate for the start point, while, in a case where the number of cases included in the learning data is equal to or larger than the threshold, sets date or date and time closest to the end point among the date or date and time included in the repair and inspection information as the candidate for the start point.

3. The information processing apparatus according to claim 1 or 2,
wherein the repair and inspection information includes any one or more among date or date and time at which inspection of the equipment has been executed, date or date and time at which information regarding repair and inspection of the equipment has been received, date or date and time at which setting of the equipment has been changed, and date or date and time at which the equipment has output an alarm regarding the running state, and date or date and time at which repair of the equipment has been executed.

4. The information processing apparatus according to claim 3,
wherein the target period is a period during which a running state of the equipment is judged as a specific state, and
the period setting unit sets the start point of the target period on a basis of one of date or date and time included in the repair and inspection information, or a symptom found through the inspection of the equipment and a difference between the running information acquired by the running information acquiring unit and the running information in non-abnormal running of the equipment.

5. The information processing apparatus according to claim 4,
wherein the running information in non-abnormal running of the equipment is one of the running information obtained upon operational design of the equipment, the running information in test running of the equipment, and the running information during running while operation of the equipment is judged as normal operation.

6. The information processing apparatus according to any one of claims 1 to 5, further comprising:
an operator information storage unit configured to store skill information indicating a skill of an operator for each operator who performs operation of selecting the candidate for the start point of the target period,
wherein the period setting unit presents the running information in the target period set on a basis of operation by the operator corresponding to specific skill information so that whether or not to utilize the running information for generating the learning data can be selected.

7. The information processing apparatus according to any one of claims 1 to 6,
wherein the learning data generating unit generates the learning data in which equipment characteristic information including one of an installation condition of the equipment, layout of the equipment and a type of the equipment is associated with the running information in the target period.

8. An information processing apparatus **characterized by** comprising:
a running information acquiring unit (121) configured to acquire running information of equipment;
a repair and inspection information acquiring unit (122) configured to acquire repair and inspection information including details of repair and inspection of the equipment, and date or date and time of the repair and inspection;
a period setting unit (130) configured to set a normal operation period during which operation of the equipment is regarded as normal operation; and
a learning data generating unit (140) configured to generate normal period learning data in which a running state of the equipment is associated with the running information, on a basis of the running information in the normal operation period,
wherein the period setting unit presents date or date and time of repair of the equipment included in the repair and inspection information as a candidate for a start point of the normal operation period, presents date or date and time so as to be able to be selected as a candidate for an end point of the normal operation period, sets the selected dates or dates and times as the start point and the end point of the normal operation period, and
sets date or date and time farther from the start point as the candidate for the end point to be presented in a case where a number of cases included in the normal period learning data is smaller than a threshold, than the candidate for the end point to be presented in a case where the number of cases included in the normal period learning data is equal to or larger than the threshold.

9. The information processing apparatus according to claim 8,
wherein, in a case where a number of cases included in the normal period learning data is smaller than a threshold, the period setting unit sets date or date and time farthest from the start point among date or date and time included in the repair and inspection information as the candidate for the end point, while, in a case where the number of cases included in the normal period learning data is equal to or larger than the threshold, sets date or date and time closest to the start point among the date or date and time included in the repair and inspection information as the candidate for the end point.

10. The information processing apparatus according to claim 8 or 9,
wherein the repair and inspection information includes any one or more among date or date and time at which inspection of the equipment has been executed, date or date and time at which information regarding repair and inspection of the equipment has been received, date or date and time at which setting of the equipment has been changed, and date or date and time at which the equipment has output an alarm regarding the running state, and date or date and time at which repair of the equipment has been executed.

11. The information processing apparatus according to claim 10,
wherein the period setting unit sets the end point of the normal operation period on a basis of one of the date or date and time included in the repair and inspection information, or a symptom found through inspection of the equipment and a difference between the running information acquired by the running information acquiring unit and the running information in non-abnormal running of the equipment.

12. The information processing apparatus according to claim 11,
wherein the running information in non-abnormal running of the equipment is one of the running information obtained upon operational design of the equipment, the running information in test running of the equipment, and the running information during running while operation of the equipment is judged as normal operation.

13. The information processing apparatus according to any one of claims 8 to 12, further comprising:
an operator information storage unit configured to store skill information indicating a skill of an operator for each operator who performs operation of selecting a candidate for the end point of the normal operation period,
wherein the period setting unit presents running information in the normal operation period set on a basis of operation by the operator corresponding to specific skill information so that whether or not to utilize the running information for generating the normal period learning data can be selected.

14. The information processing apparatus according to any one of claims 8 to 13,
wherein the learning data generating unit generates the normal period learning data in which equipment characteristic information including one of an installation condition of the equipment, layout of the equipment and a type of the equipment is associated with the running information in the normal operation period.

15. An information processing method **characterized by** comprising:
acquiring running information of equipment;
acquiring repair and inspection information including details of repair and inspection of the equipment and date or date and time of the repair and inspection;
performing period setting processing of setting a start point and an end point of a target period;
generating learning data in which a running state of the equipment is associated with the running information, on a basis of the running information in the target period set in the period setting processing;
in the period setting processing, presenting date or date and time of repair of the equipment included in the repair and inspection information as a candidate for the end point of the target period, presenting date or date and time so as to be able to be selected as a candidate for the start point of the target period, setting the selected dates or dates and times as the start point and the end point of the target period, and
setting date or date and time farther from the end point as the candidate for the start point to be presented in a case where a number of cases included in the learning data is smaller than a threshold, than the candidate for the start point to be presented in a case where the number of cases included in the learning data is equal to or larger than the threshold.

16. An information processing method **characterized by** comprising:
acquiring running information of equipment;
acquiring repair and inspection information including details of repair and inspection of the equipment and date or date and time of the repair and inspection;
performing period setting processing of setting a normal operation period during which operation of the equipment is regarded as normal operation;
generating normal period learning data in which a running state of the equipment is associated with the running information, on a basis of the running information in the normal operation period;
in the period setting processing, presenting date or date and time of repair of the equipment included in the repair and inspection information as a candidate for a start point of the normal operation period, presenting date or date and time so as to be able to be selected as a candidate for an end point of the normal operation period, setting the selected dates or dates and times as the start point and the end point of the normal operation period, and
setting date or date and time farther from the start point as the candidate for the end point to be presented in a case where a number of cases included in the normal period learning data is smaller than a threshold, than the candidate for the end point to be presented in a case where the number of cases included in the normal period learning data is equal to or larger than the threshold.

17. A learning apparatus **characterized by** comprising:
a running information acquiring unit (121) configured to acquire running information of equipment;
a repair and inspection information acquiring unit (122) configured to acquire repair and inspection information including details of repair and inspection of the equipment and date or date and time of the repair and inspection;
a learning data generating unit (140) configured to generate learning data on a basis of the running information in a target period set on a basis of the repair and inspection information; and
a learning unit (150) configured to learn a condition of the running information to be associated with a running state of the equipment, on a basis of the learning data.
